# EUROPÄISCHE PATENTSCHRIFT

(11) **EP 3 024 973 B1**
(45) Veröffentlichungstag und Bekanntmachung des Hinweises auf die Patenterteilung: **26.12.2018**
(21) Anmeldenummer: 14752816.0
(22) Anmeldetag: 12.08.2014
(51) Int. Cl.: D21B 1/32, D21D 5/06

(54) **VORRICHTUNG UND VERFAHREN ZUM AUFBEREITEN VON FASERHALTIGEN VERBUNDWERKSTOFFEN**
DEVICE AND METHOD FOR PROCESSING COMPOSITE MATERIALS CONTAINING FIBERS
DISPOSITIF ET PROCÉDÉ PERMETTANT DE TRAITER DES MATÉRIAUX COMPOSITES CONTENANT DES FIBRES

(30) Priorität: 03.09.2013 DE 102013217562
(43) Veröffentlichungstag der Anmeldung: 01.06.2016
(73) Patentinhaber: MERI Environmental Solutions GmbH, 81673 München (DE)
(72) Erfinder: MENKE, Lucas, 81545 München (DE); WÜNSCHE, Gisbert, 88255 Baienfurt (DE); ALBRECHT, Falk, 88410 Bad Wurzach (DE)
(74) Vertreter: Henkel, Breuer & Partner
(86) Internationale Anmeldenummer: PCT/EP2014/067270
(87) Internationale Veröffentlichungsnummer: WO 2015/032596

(56) Entgegenhaltungen:
- EP-A1- 1 772 554
- EP-A2- 1 118 706
- US-A- 4 974 781

## Beschreibung

Die vorliegende Erfindung betrifft eine Vorrichtung zum Aufbereiten bzw. Wiederaufbereiten von faserhaltigen Verbundwerkstoffen, insbesondere von faserhaltigen Verpackungsmaterialien, wie beispielsweise von gebrauchten Getränkeverpackungen, sowie eine eine solche Vorrichtung umfassende Anlage und ein Verfahren zum Aufbereiten solcher faserhaltiger Verbundwerkstoffe.

Faserhaltige Verbundwerkstoffe, insbesondere faserhaltige Verpackungsmaterialien, welche gebraucht auch unter der Bezeichnung "used beverage cartons" (UBC) bekannt sind, wie Getränkeverpackungen beispielsweise für Milch, Säfte oder dergleichen, enthalten teure und daher wertvolle Inhaltsstoffe, wie insbesondere Fasermaterial, Kunststoff, wie beispielsweise Polyethylen oder dergleichen, und ggf. Aluminiumfolie. Einige der auf dem Markt vertriebenen Getränkeverpackungen bestehen beispielsweise aus ca. 70 % Papierfasern, ca. 25 % Polyethylen und ca. 5 % Aluminiumfolie. Aus diesem Grund und aufgrund der Menge der täglich anfallenden Mengen an Abfallverpackungsmaterialien ist es wirtschaftlich interessant und insbesondere auch umweltpolitisch erwünscht, gebrauchte faserhaltige Verbundwerkstoffe zu recyceln bzw. wiederaufzubereiten, um deren Inhaltsstoffe voneinander zu trennen und diese wiederzuverwerten.

Bekannte Verfahren zur Aufbereitung von gebrauchten Verpackungsmaterialien und insbesondere zum Wiedergewinnen des Fasermaterials umfassen die Schritte Vorsortieren des Verpackungsmaterials, Zerkleinern des vorsortierten Verpackungsmaterials, Auflösen des zerkleinerten Verpackungsmaterials mit Wasser in einem Pulper, Überführen der in dem Pulper erhaltenen aufgelösten Mischung in eine Siebtrommel und Auftrennen der Mischung in der Siebtrommel in eine faserreiche Fraktion und in eine faserarme Fraktion sowie Überführen der faserreichen Fraktion in eine Wascheinrichtung und Waschen derselben. Derartige Verfahren werden heute insbesondere für kleinere kommunale Anlagen mit einer Menge an aufzubereitendem Verpackungsmaterial in einer Größenordnung von 10 bis 15 Tonnen pro Tag eingesetzt.

Eine entsprechende, die Merkmale des Oberbegriffs des Anspruchs 1 aufweisende Vorrichtung ist z.B. aus der Schrift EP 1 772 554 A1 bekannt.

Allerdings unterscheidet sich die Zusammensetzung der Verpackungsmaterialien aufgrund von unterschiedlichen technischen Anforderungen und gesetzlichen Regelungen und aufgrund von verschiedenen Produktzusammensetzungen, welche in den Verpackungen gelagert werden, von Land zu Land. In einigen Ländern enthalten Getränkeverpackungen beispielsweise höhere Mengen an Zusätzen zur Erhöhung der Nassfestigkeit, die im Wesentlich der höheren Resistenz gegen Feuchtigkeit von außen oder gegen durch Temperaturgradienten entstehendem Kondenswasser dienen. Materialien mit solchen Zusätzen zur Erhöhung der Nassfestigkeit weisen in einem Pulper andere Auflösungseigenschaften als entsprechende Verpackungen ohne solche Zusätze auf. Aus diesem Grund müssen die auf den bekannten Verfahren basierenden Anlagen zum Aufbereiten von faserhaltigen Verbundwerkstoffen und insbesondere von faserhaltigen Verpackungsmaterialien je nach aufzubereitenden Material speziell ausgelegt und betrieben werden. Aufgrund der vergleichsweise geringen Flexibilität der bekannten Aufbereitungsanlagen hinsichtlich der Änderung der Zusammensetzung des Ausgangsmaterials - insbesondere im Hinblick auf Zusätzen zur Erhöhung der Nassfestigkeit - ist bei dem Betrieb dieser Anlagen auch sicherzustellen, dass jeweils identisch vorbehandeltes Ausgangsmaterial eingesetzt wird. Es fehlt daher beispielsweise an der Flexibilität, sowohl Ausgangsmaterial mit vergleichsweise geringem Verschmutzungsgrad als auch solches mit vergleichsweise großem Verschmutzungsgrad einsetzen zu können.

Ein weiterer Nachteil von bekannten Anlagen zum Aufbereiten von faserhaltigen Verbundwerkstoffen und insbesondere von faserhaltigen Verpackungsmaterialien ist, dass diese aufgrund der Vielzahl an notwendigen Anlagenteilen vergleichsweise komplex sind, eine komplexe Steuerung benötigen und platzbeanspruchend sind. Aus diesen Gründen sind diese sowohl mit hohen Investitionskosten als auch mit hohen Betriebskosten verbunden.

Abgesehen davon weisen die bekannten Anlagen auch den Nachteil auf, dass diese den faserhaltigen Verbundwerkstoff nur in dessen Einzelbestandteile auflösen können, ohne jedoch in der für die Auflösung vorgesehenen Vorrichtung eine Vorreinigung mit Wasser durchführen zu können, um den Verbundwerkstoff vor dessen Auflösung beispielsweise von fetthaltigen Substanzen, wie Milch, (vor)reinigen zu können.

Schließlich weisen die bekannten Anlagen auch den Nachteil auf, dass diese aufgrund ihres Aufbaus aus einer Vielzahl von Anlagenteilen nicht oder zumindest nur unter hohem Kostenaufwand bezüglich ihrer Kapazität an täglich verarbeitbarem Ausgangsmaterial erweiterbar sind.

Ausgehend davon liegt die Aufgabe der vorliegenden Erfindung in der Bereitstellung einer Vorrichtung zum Aufbereiten von faserhaltigen Verbundwerkstoffen, insbesondere von faserhaltigen Verpackungsmaterialien und insbesondere von gebrauchten Getränkeverpackungen, welche nicht nur zu einer effizienten und vollständigen Trennung der Verbundwerkstoffe in Fasermaterial einerseits und Kunststoff bzw. Metall, wie beispielsweise Aluminium, andererseits führt, sondern welche insbesondere auch bezüglich der Zusammensetzung (insbesondere im Hinblick auf Zusätze zur Erhöhung der Nassfestigkeit) und der Reinheit des einzusetzenden faserhaltigen Verbundwerkstoffausgangsmaterials sehr flexibel ist, welche insbesondere auch einfach ausgestaltet ist, welche einfach zu bedienen und steuern ist, welche zudem kostengünstig modulartig bezüglich der Kapazität an pro Zeiteinheit aufzubereitenden Ausgangsmaterial erweiterbar ist, in welcher das Ausgangsmaterial mit Wasser vorgereinigt werden kann, und, welche sich schließlich durch vergleichsweise niedrige Investitionskosten und Betriebskosten auszeichnet.
Erfindungsgemäß wird diese Aufgabe gelöst durch eine Vorrichtung zum Aufbereiten von faserhaltigen Verbundwerkstoffen, insbesondere von faserhaltigen Verpackungsmaterialien, mit einem Doppelbehälter, welcher umfasst:
- einen in wenigstens einer seiner beiden Umfangsrichtungen drehbaren inneren trommelartigen Behälter mit einem hohlzylindrischen Trommelmantel, der an einer seiner beiden Stirnseiten mit einem Stirnboden geschlossen ist und an seiner gegenüberliegenden Stirnseite offen ist, wobei der Trommelmantel zumindest auf einem Abschnitt seiner Umfangsfläche Sieblöcher aufweist, und wobei zumindest auf einem - bevorzugt anderen - Abschnitt der Umfangsfläche des Trommelmantels und/oder auf dem Stirnboden wenigstens eine Schikane vorgesehen ist, sowie
- einen äußeren Behälter, der den Trommelmantel des inneren, trommelartigen Behälters zumindest teilweise umgibt, so dass sich zwischen der äußeren Oberfläche des inneren, trommelartigen Behälters und der inneren Oberfläche des äußeren Behälters ein Zwischenraum ausbildet,
wobei der Doppelbehälter in der Vertikalebene schwenkbar ist.
Diese Lösung basiert auf der überraschenden Erkenntnis, dass eine Vorrichtung mit einem derart ausgestalteten Doppelbehälter, dessen innerer Trommelbehälter auf seiner Umfangsfläche Sieblöcher aufweist, wobei zusätzlich auf der Umfangsfläche des Trommelmantels und/oder auf dem Stirnboden wenigstens eine Schikane vorgesehen ist, und, welcher in der Vertikalebene schwenkbar ist, nicht nur mit Wasser eine hervorragende Auflösung von faserhaltigen Verbundwerkstoffen, insbesondere von faserhaltigen Verpackungsmaterialien, wie gebrauchten Getränkeverpackungen, in die einzelnen Bestandteile, nämlich Fasermaterial, Kunststoff und ggf. Metall, wie Aluminium, erreicht, also die Funktion eines Pulpers wahrnimmt, sondern insbesondere auch zu einer hervorragenden Trennung der einzelnen Bestandteile in Faserstoffsuspension einerseits und Restmaterial aus Kunststoff und ggf. Metall andererseits und auch zu einer guten Reinheit der abgetrennten Faserstoffsuspension sowie des Restmaterials führt, also auch die Funktion einer Siebtrommel und die einer nachfolgenden Wascheinrichtung erfüllt. Abgesehen davon erlaubt die erfindungsgemäße Vorrichtung auch die Durchführung einer Vorreinigung des Ausgangsmaterials, bei der das Ausgangsmaterial vor dessen Auflösung in die Einzelbestandteile mit Wasser beispielsweise von fetthaltigen Substanzen, wie Milch, gereinigt wird. Dabei bewirkt die wenigstens eine Schikane (welche als Störkante wirkt) bei dem Drehen bzw. Rotieren des inneren Behälters eine mechanische Beanspruchung der in dem inneren Behälter enthaltenen Mischung aus Wasser und Ausgangsmaterial und verstärkt somit das Auflösen des Ausgangsmaterials mit Wasser in die einzelnen Bestandteile und erleichtert eine Vorreinigung des Ausgangsmaterials mit Wasser, wohingegen durch die Sieblöcher eine Auftrennung der in dem inneren Behälter enthaltenen Mischung aus den mit Wasser aufgelösten Einzelbestandteilen in eine faserstoffreiche Fraktion und in eine faserstoffarme Fraktion erreicht wird. Dabei wird diese Kombination an Funktionen erfindungsgemäß dadurch erreicht, dass der Doppelbehälter in der Vertikalebene schwenkbar ist und daher in verschiedenen Positionen betrieben werden kann, wobei jede dieser verschiedenen Positionen für jeweils eine der vorgenannten Aufgaben, nämlich Vorreinigung des faserhaltigen Verbundwerkstoffs, Auflösung von faserhaltigen Verbundwerkstoffen in deren einzelne Bestandteile, Trennung der einzelnen Bestandteile in Faserstoffsuspension und Restmaterial aus Kunststoff und ggf. Metall sowie Waschen der Faserstoffsuspension und des Restmaterials, optimiert ist. So kann durch entsprechende Einstellung des Schwenkwinkels des Doppelbehälters (d.h. des Winkels zwischen der Mittellängsachse des hohlzylindrischen Trommelmantels und der Horizontalebene) das Volumen an Inhaltsstoffen, wie Ausgangsmaterial und Wasser, welches in dem hohlzylindrischen Trommelmantel des inneren Behälters des Doppelbehälters eingefüllt werden kann, eingestellt werden. Je näher nämlich der auf die Horizontalebene bezogenen Schwenkwinkel an 90° angenähert wird, desto mehr Wasser bzw. Ausgangsmaterial können in den hohlzylindrischen Trommelmantel eingefüllt werden, wohingegen bei einem auf die Horizontalebene bezogene Schwenkwinkel von 0°, also bei einer horizontalen Ausrichtung des Doppelbehälters, die gesamte Flüssigkeit über die Sieblöcher aus dem hohlzylindrischen Trommelmantel des inneren Behälters in den zwischen dem inneren Behälter und dem äußeren Behälter vorgesehenen Zwischenraum hinausläuft. Abgesehen davon kann über den eingestellten Schwenkwinkel des Doppelbehälters auch gezielt gesteuert werden, ob die in den inneren Behälter eingeführte Mischung aus Wasser und aufzubereitendem faserhaltigem Verbundwerkstoff selektiv oder zumindest vornehmlich nur den Abschnitt des Trommelmantels des inneren Behälters kontaktiert, an dem die wenigstens eine Schikane zum Verbessern der Auflösung bzw. der Vorreinigung bzw. des Waschens des Verbundwerkstoffs vorgesehen ist, also vornehmlich eine Auflösung bzw. Vorreinigung (ohne Trennung der einzelnen Bestandteile) bzw. Waschen (ohne Trennung der einzelnen Bestandteile) des Verbundwerkstoffs stattfindet, oder, ob die in den inneren Behälter eingeführte Mischung aus Wasser und aufzubereitendem faserhaltigem Verbundwerkstoff auch den Abschnitt des Trommelmantels des inneren Behälters kontaktiert, an dem die Sieblöcher zum Trennen der Mischung in Faserstoffsuspension und Restmaterial vorgesehen sind, also eine Trennung der aufgelösten Bestandteile des Verbundwerkstoffs in eine faserstoffreiche Fraktion und in eine faserstoffarme Fraktion stattfindet. Wenn beispielsweise die Schikane(n) zum Auflösen des aufzubereitenden Ausgangsmaterials mit Wasser an dem dem Stirnboden benachbarten Ende der Umfangsfläche des Trommelmantels und/oder auf dem Stirnboden angeordnet sind und die Sieblöcher an dem diesem gegenüberliegenden Ende der Umfangsfläche des Trommelmantels angeordnet sind, kann beispielsweise durch Schwenken des dem Stirnboden gegenüberliegenden Endes des inneren Behälters auf einen Winkel von 30 bis 90° gegenüber der Horizontalen erreicht werden, dass die Mischung aus Ausgangsmaterial und Wasser bei entsprechendem Befüllungsgrad des inneren Behälters nur oder zumindest vornehmlich den Abschnitt der Umfangsfläche des Trommelmantels des inneren Behälters kontaktiert, an dem die Schikane(n) vorgesehen ist bzw. sind. Durch Drehen bzw. Rotieren des inneren Behälters in dieser Position wird dann aufgrund der mechanischen Beanspruchung der Mischung durch die Schikane(n) eine Vorreinigung des Ausgangsmaterials mit Wasser und/oder eine Auflösung des Ausgangsmaterials mit Wasser in die einzelnen Bestandteile erreicht, wobei der Vorreinigungsgrad und Auflösungsgrad durch die Zeitspannen, für die diese Verfahrensschritte durchgeführt werden, gezielt eingestellt werden kann. Wenn danach der Schwenkwinkel des Doppelbehälters verringert wird, kontaktiert die aufgelöste Mischung in dem inneren Behälter auch den Abschnitt der Umfangsfläche des Trommelmantels, in dem die Sieblöcher vorgesehen sind, so dass dann Faserstoffsuspension durch die Sieblöcher in den zwischen dem inneren Behälter und dem äußeren Behälter ausgebildeten Zwischenraum läuft, wohingegen das Restmaterial in dem Inneren des inneren Behälters zurückgehalten wird. Wenn anschließend der Schwenkwinkel erneut erhöht wird, wird das für die wässrige Mischung verfügbare Volumen des inneren Behälter erneut erhöht, so dass so durch erneutes Einführen von Wasser die in dem inneren Behälter enthaltene Mischung gewaschen werden kann. Durch nachfolgendes Verringern des Schwenkwinkels auf 0° kann dann die Faserstoffsuspension aus dem Zwischenraum und das Kunststoff und ggf. Metall enthaltende Restmaterial aus dem Inneren des inneren Behälters entfernt werden.

Durch Einstellen der Zeiten der einzelnen vorstehend beschriebenen Verfahrensschritte können die einzelnen Schritte einfach an die Zusammensetzung und den Reinheitsgrad des Ausgangsmaterials angepasst werden und insbesondere der gewünschte Vorreinigungsgrad des Ausgangsmaterials, der Auflösungsgrad des Ausgangsmaterials mit Wasser in Abhängigkeit von der Zusammensetzung und der Reinheit des Ausgangsmaterials maßgeschneidert werden. Aus diesem Grund ist die erfindungsgemäße Vorrichtung bezüglich der Zusammensetzung und der Reinheit des einzusetzenden faserhaltigen Verbundwerkstoffausgangsmaterial sehr flexibel.

Aufgrund des vorbeschriebenen Aufbaus, d.h. der Integration von Auflösungseinrichtung, Trenneinrichtung und Wascheinrichtung, in einer Vorrichtung, nämlich dem Doppelbehälter, ist die erfindungsgemäße Vorrichtung insbesondere auch einfach ausgestaltet, einfach zu bedienen und einfach zu steuern. Zudem kann aufgrund dessen die Vorrichtung auch einfach und kostengünstig modulartig bezüglich der Kapazität an pro Zeiteinheit aufzubereitenden Ausgangsmaterial erweiterbar, nämlich indem der Vorrichtung einfach ein zweiter entsprechend dimensionierter Doppelbehälter zugefügt wird. Aufgrund der kompakten und einfachen Ausgestaltung zeichnet sich die erfindungsgemäße Vorrichtung insbesondere auch durch vergleichsweise niedrige Investitionskosten und Betriebskosten aus. Die erfindungsgemäße Vorrichtung eignet sich insbesondere auch für die Aufbereitung von faserhaltigen Verbundwerkstoff mit einem Durchsatz von 3 bis 100 Tonnen pro Tag, wobei der faserhaltige Verbundwerkstoff jede Art von Fasermaterial, wie beispielsweise in der Form von Pappe oder Papier, jede Art von Kunststoff, wie beispielsweise Polyethylen, und jede Art von Metall, wie beispielsweise Aluminiumfolie, enthalten kann. Mithin eignet sich die erfindungsgemäße Vorrichtung insbesondere für die Aufbereitung von faserhaltigen Verpackungsmaterialien, wie zum Beispiel gebrauchten Getränkeverpackungen.

Wie vorstehend dargelegt, ist der Doppelbehälter der Vorrichtung erfindungsgemäß in der Vertikalebene schwenkbar. Um eine hervorragende Auflösung des faserstoffhaltigen Ausgangsmaterials in dem inneren Behälter des Doppelbehälters mit Wasser erreichen zu können, wird es in Weiterbildung des Erfindungsgedankens vorgeschlagen, dass der innere trommelartige Behälter in wenigstens einer seiner beiden Umfangsrichtungen, d.h. in der Umfangsrichtung des Trommelmantels, drehbar ist. Dies kann auf alle dem Fachmann bekannten Arten erreicht werden, und zwar beispielsweise indem an den Stirnboden des inneren Behälters eine drehbare Welle angebracht wird und diese mit einem Drehmotor verbunden wird. Durch Drehen bzw. Rotieren des inneren Behälters kommt die darin eingefüllte Mischung aus Wasser und Ausgangsmaterial wiederholt in Kontakt mit der wenigstens einen Schikane und wird infolge dessen mechanisch beansprucht, wodurch die Auflösung des Ausgangsmaterials mit Wasser in die Einzelbestandteile gefördert wird.

Um die vorgenannten Effekte besonders gut zu erreichen, ist es zudem bevorzugt, dass der innere trommelartige Behälter in wenigstens einer seiner beiden Umfangsrichtungen mit einer stufenweise einstellbaren Geschwindigkeit drehbar ist. Dadurch kann die Drehgeschwindigkeit einfach auf einen für die Auflösung des Ausgangsmaterials optimalen Wert eingestellt werden.

Zur Erhöhung des Effekts der auf einem Abschnitt der Umfangsfläche des Trommelmantels und/oder auf dem Stirnboden angebrachten wenigstens eine Schikane ist es ferner bevorzugt, dass der innere trommelartige Behälter in beiden seiner beiden Umfangsrichtungen drehbar ist und die Drehrichtung von einer Umfangsrichtung in die andere und umgekehrt geändert werden kann. Dadurch kann die pro Schikane auf die in dem inneren Behälter enthaltene Mischung ausgeübte mechanische Beanspruchung erhöht werden.

Gemäß einer weiteren bevorzugten Ausführungsform der vorliegenden Erfindung ist der Doppelbehälter um einen Winkel von mehr als 0 bis 45° und bevorzugt von mehr als 0 bis 90° bezogen auf die Horizontalebene schwenkbar. Dadurch wird erreicht, dass die vorstehend in Bezug auf die Schwenkbarkeit des Doppelbehälters erreichten Effekte besonders gut erreicht werden und der Doppelbehälter insbesondere auf jeden für die Erfüllung der gewünschten Funktion geeigneten Winkel geschwenkt werden kann.

Dabei ist es von Vorteil, wenn der Doppelbehälter stufenweise um einen Winkel von 0 bis 45° und bevorzugt um 0 bis 90° bezogen auf die Horizontalebene schwenkbar ist. Die vorstehend angegeben Winkel beziehen sich jeweils auf ein Schwenken des Doppelbehälters an dem dem Stirnboden des inneren Behälters gegenüberliegenden Ende.

Die Schwenkbarkeit kann auf alle geeigneten Weisen erreicht werden. Beispielsweise kann der Doppelbehälter auf einem geeignet konstruierten schwenkbaren Gestell gelagert werden. Dabei kann das Gestell zum Beispiel zwei Arme umfassen, welche parallel zu der Längsrichtung des äußeren Behälters verlaufen, wobei die beiden Arme an dem dem Stirnboden des inneren Behälters gegenüberliegenden Ende über einen Querträger verbunden sind, auf dem das entsprechende Ende des äußeren Behälters oder des inneren Behälters (falls sich der äußere Behälter nicht über die gesamte Länge des inneren Behälters erstreckt) aufliegt. An dem diesem Querträger gegenüberliegenden Ende können die Arme des Gestells ebenfalls durch einen Querträger verbunden sein. Dabei ist wenigstens einer der Arme oder Querträger mit einem Schwenkmechanismus verbunden, über welchen der Schwenkwinkel des Doppelbehälters eingestellt werden kann.

Um die Funktion der Verbesserung des Auflösens bzw. der Vorreinigung bzw. Waschen des in dem inneren Behälter des Doppelbehälters enthaltenden Ausgangsmaterials mit Wasser infolge mechanischer Beanspruchung besonders gut erfüllen zu können, wird es in Weiterbildung des Erfindungsgedankens vorgeschlagen, dass die wenigstens eine Schikane an der Innenseite zumindest eines Abschnitt der Umfangsfläche des Trommelmantels und/oder auf dem Stirnboden des inneren Behälters vorgesehen und vorzugsweise nach innen (d.h. in den von dem Trommelmantel umgebenen Innenraum des inneren Behälters hinein) gerichtet ist. Dabei ist es besonders bevorzugt, dass der Abschnitt der Umfangsfläche des Trommelmantels, an dem die wenigstens eine Schikane vorgesehen ist, von dem Abschnitt der Umfangsfläche des Trommelmantels, an dem die Sieblöcher vorgesehen sind, getrennt ist oder von diesem zumindest teilweise getrennt ist, also die beiden Abschnitte allenfalls partiell überlappen. Dadurch wird sichergestellt, dass durch entsprechendes Einstellen des Schwenkwinkels des Doppelreaktors erreicht werden kann, dass in dem inneren Behälter befindliche Flüssigkeit ausschließlich mit dem mit Schikane(n) versehenen Abschnitt in Kontakt kommt.

Um das Auflösen des in dem inneren Behälter des Doppelbehälters enthaltenden Ausgangsmaterials mit Wasser besonders wirksam zu verbessern, ist es gemäß einer weiteren bevorzugten Ausführungsform der vorliegenden Erfindung vorgesehen, dass der Trommelmantel und/oder der Stirnboden des inneren trommelartigen Behälters, im Querschnitt des inneren Behälters gesehen, 1 bis 60, bevorzugt 1 bis 24 und besonders bevorzugt 1 bis 6 Schikanen aufweist. Vorzugsweise sind die Schikanen über Innenfläche des Umfangs des Trommelmantels und/oder auf dem Stirnboden gleichmäßig verteilt.

Um zu erreichen, dass durch ausreichend hohes Schwenken des Doppelbehälters die in dem inneren Behälter enthaltene Mischung aus Wasser und Ausgangsmaterial selektiv nur mit dem mit Schikane(n) versehenen Abschnitt des Trommelmantels in Kontakt gebracht werden kann, ist es zudem bevorzugt, dass die Schikane bzw. alle Schikanen an der Innenseite eines dem Stirnboden benachbarten Abschnitts der Umfangsfläche des Trommelmantels und/oder auf dem Stirnboden angeordnet ist/sind.

Bei der vorgenannten Ausführungsform ist es zudem bevorzugt, dass die wenigstens eine Schikane oder, falls mehr als eine Schikane vorgesehen ist, zumindest ein Teil der Schikanen an der Innenseite eines Abschnitts der Umfangsfläche des Trommelmantels angeordnet ist/sind, der sich - ausgehend von dem mit dem Stirnboden versehenen Ende in der Längsachse des Trommelmantels gesehen - über 15 bis 30 %, bevorzugt 10 bis 30 %, besonders bevorzugt 0 bis 40 % und ganz besonders bevorzugt 0 bis 50 % der länglichen Ausdehnung des Trommelmantelumfangs erstreckt. In dem letztgenannten Fall erstreckt sich somit dieser Abschnitt über die - ausgehend von dem mit dem Stirnboden versehenen Ende - erste Hälfte der Umfangsfläche des inneren Behälters und in dem erstgenannten Fall, wenn beispielsweise der innere Behälter eine Länge von 3 Meter aufweist, über den Teil der Umfangsfläche des inneren Behälters, welcher 30 cm von dem Stirnboden entfernt beginnt und 90 cm von dem Stirnboden entfernt endet.

Grundsätzlich kann die wenigstens eine Schikane jede beliebige Form annehmen. Beispielsweise kann es sich um eine von der Innenumfangsfläche des Trommelmantels nach innen erstreckende Erhebung handeln, welche im Querschnitt kreisbogenförmig, elliptisch, oval, rechteckig oder polygonal ausgestaltet ist. Dabei kann die Erhebung beispielsweise durch Einprägen der Umfangsfläche von der Außenseite her ausgebildet werden. Die Schikane kann sich exakt in der Umfangsrichtung des Trommelmantels erstrecken, exakt in der Längsrichtung des Trommelmantels erstrecken oder sowohl in der Längs- als auch in der Umfangsrichtung des Trommelmantels erstrecken. In dem letztgenannten Fall ist die wenigstens eine Schikane beispielsweise spiralförmig an der Innenfläche des Trommelmantels angeordnet. Vorzugsweise erstreckt sich die wenigstens eine Schikane exakt in der Längsrichtung des Trommelmantels oder sowohl in der Längs- als auch in der Umfangsrichtung und besonders bevorzugt exakt in der Längsrichtung des Trommelmantels.

In Weiterbildung des Erfindungsgedankens wird es vorgeschlagen, dass die wenigstens eine Schikane einen asymmetrischen Querschnitt aufweist, wobei der Querschnitt in diesem Fall den Schnitt der Schikane in der Ebene senkrecht zu der Längsachse des trommelartigen Behälters bezeichnet. In diesem Fall eines asymmetrischen Querschnitts unterscheidet sich die mechanische Beanspruchung, welche die wenigstens eine Schikane auf die in dem inneren Behälter enthaltene Mischung ausübt, in Abhängigkeit von der Drehrichtung des inneren Behälters. Auf diese Weise kann beispielsweise und bevorzugt die wenigstens eine Schikane so ausgestaltet werden, dass sie - wenn der innere Behälter in einer ersten Umfangsrichtung des Trommelbehälters gedreht wird - die in dem Trommelbehälter enthaltene Mischung mechanisch so stark beansprucht, dass eine optimale Auflösung des faserhaltigen Verbundwerkstoffs mit Wasser stattfindet, wohingegen die Schikane(n) - wenn der innere Behälter in entgegengesetzter Umfangsrichtung des Trommelbehälters gedreht wird - die in dem Trommelbehälter enthaltene Mischung mechanisch nur schwach beansprucht, sondern lediglich gut vermischt wird, so dass das Wasser den darin enthaltenen Feststoff wäscht, ohne den faserhaltigen Verbundwerkstoff merklich aufzulösen.

Beispielsweise kann die wenigstens eine Schikane einen keilförmigen bzw. dreiecksförmigen Querschnitt aufweisen, der von der von der Mittellängsachse des Trommelmantels in radialer Richtung durch die Keilspitze verlaufenden Gerade in zwei Teile geteilt wird, wobei sich der erste Winkel α₁ zwischen der von der von der Mittellängsachse des Trommelmantels in radialer Richtung durch die Keilspitze verlaufenden Gerade und der den ersten Teil der Schikane ausgehend von der Keilspitze begrenzenden Linie von dem zweiten Winkel α₂ zwischen der von der von der Mittellängsachse des Trommelmantels in radialer Richtung durch die Keilspitze verlaufenden Gerade und der den zweiten Teil der Schikane ausgehend von der Keilspitze begrenzenden Linie unterscheidet.

Bei der vorgenannten Ausführungsform ist es bevorzugt, dass der erste Winkel α₁ zwischen 45 und 165° und bevorzugt zwischen 80 und 140° beträgt und/oder der zweite Winkel α₂ zwischen 165 und 45° und bevorzugt zwischen 140 und 80° beträgt.

In einer alternativen, besonders bevorzugten Ausführungsform ist es vorgesehen, dass der erste Winkel α₁ zwischen mehr als 90 und 140° beträgt und der zweite Winkel α₂ zwischen 40 und 80° beträgt oder umgekehrt. In diesem Fall weist die wenigstens eine Schikane eine vergleichsweise scharfe Seite auf, nämlich die mit dem Winkel zwischen mehr als 90 und 140°, und eine vergleichsweise "sanfte" Seite, nämlich die mit dem Winkel zwischen 40 und 80°. Auf diese Weise ist die wenigstens eine Schikane so ausgestaltet, dass sie - wenn der innere Behälter in einer ersten Umfangsrichtung des Trommelbehälters gedreht wird, in der die Mischung der scharfen Seite der Schikane(n) ausgesetzt ist - die in dem Trommelbehälter enthaltene Mischung mechanisch so stark beansprucht, dass eine optimale Auflösung des faserhaltigen Verbundwerkstoffs mit Wasser stattfindet, wohingegen die Schikane(n) - wenn der innere Behälter in entgegengesetzter Umfangsrichtung des Trommelbehälters gedreht wird, in der die Mischung der sanften Seite der Schikane(n) ausgesetzt ist - die in dem Trommelbehälter enthaltene Mischung mechanisch nur schwach beansprucht, sondern lediglich gut vermischt wird, so dass das Wasser den darin enthaltenen Feststoff wäscht, ohne den faserhaltigen Verbundwerkstoff merklich aufzulösen.

Gemäß einer weiteren bevorzugten Ausführungsform der vorliegenden Erfindung ist es vorgesehen, dass die wenigstens eine Schikane eine sich von der Umfangsfläche des Trommelmantels aus in Radialrichtung nach innen erstreckende Höhe von wenigstens 3 cm und bevorzugt wenigstens 10 cm aufweist.

Grundsätzlich ist die vorliegende Erfindung bezüglich der Ausmaße des Doppelbehälters und des Trommelmantels nicht beschränkt. Gute Ergebnisse werden jedoch beispielsweise erhalten, wenn der Durchmesser des Trommelmantels des inneren trommelartigen Behälters 100 bis 600 cm, bevorzugt 150 bis 350 cm und besonders bevorzugt 180 bis 320 cm beträgt und/oder die Länge des Trommelmantels des inneren trommelartigen Behälters 100 bis 800 cm, bevorzugt 150 bis 600 cm und besonders bevorzugt 250 bis 550 cm beträgt.

Wie vorstehend dargelegt, müssen die Schikanen nicht auf der Umfangsfläche des Trommelmantels des inneren Behälters angeordnet sein, sondern können alle Schikanen oder kann ein Teil der Schikanen auf dem Stirnboden des inneren Behälters vorgesehen sein. Dabei kann die wenigstens eine Schikane auf dem Stirnboden radial, tangential oder spiralförmig angeordnet sein. Im Übrigen gelten die vorstehend in Bezug auf die an der Umfangsfläche des Trommelmantels angeordneten Schikanen beschriebenen Geometrien und Ausmaße auch für die auf dem Stirnboden des inneren Behälters angeordneten Schikanen.

Vorzugsweise weisen die auf dem Stirnboden des inneren Behälters angeordneten Schikanen eine größere Höhe auf als die an der Umfangsfläche des Trommelmantels angeordneten Schikanen. Vorzugsweise beträgt die Höhe der auf dem Stirnboden des inneren Behälters angeordneten Schikanen 1 bis 50 cm und besonders bevorzugt 15 bis 30 cm.

Um zu erreichen, dass durch ein Schwenken des Doppelbehälters mit einem vergleichsweise hohen Schwenkwinkel die in dem inneren Behälter enthaltene Mischung aus Wasser und Ausgangsmaterial selektiv nur mit dem mit Schikane(n) versehenen Abschnitt des Trommelmantels in Kontakt gebracht wird und so ausschließlich eine Vorreinigung und/oder Auflösung des Ausgangsmaterials mit Wasser (ohne Trennung der Mischung in verschiedene Fraktionen) erreicht werden kann, aber durch ein Einstellen eines niedrigeren Schwenkwinkels des Doppelbehälters die in dem inneren Behälter enthaltene Mischung aus Wasser und Ausgangsmaterial auch mit dem mit den Sieblöchern versehenen Abschnitt des Trommelmantels in Kontakt gebracht und so eine Trennung der aufgelösten Mischung in eine faserstoffreiche Fraktion und in eine faserstoffarme Fraktion erreicht werden kann, ist es gemäß einer weiteren bevorzugten Ausführungsform der vorliegenden Erfindung vorgesehen, dass die Sieblöcher auf einem Abschnitt der Umfangsfläche des Trommelmantels des inneren trommelartigen Behälters angeordnet sind, wobei sich dieser Abschnitt der Umfangsfläche des Trommelmantels, ausgehend von dem mit dem Stirnboden versehenen Ende in der Längsachse des Trommelmantels gesehen, über 80 bis 90 %, bevorzugt 70 bis 90 %, besonders bevorzugt 65 bis 95 % und ganz besonders bevorzugt 60 bis 95 % der länglichen Ausdehnung des Trommelmantelumfangs erstreckt. In dem Fall einer Erstreckung des Abschnitts bei 60 bis 95 % der länglichen Ausdehnung des Trommelmantelumfangs heißt dies, dass sich dieser Abschnitt - wenn beispielsweise der innere Behälter eine Länge von 3 Meter aufweist - über den Teil der Umfangsfläche des inneren Behälters erstreckt, welcher 180 cm von dem Stirnboden entfernt beginnt und 15 cm vor dem dem Stirnboden gegenüberliegenden Ende der Umfangsfläche des inneren Behälters endet. Dabei sind die Sieblöcher bei dieser Ausführungsform vorzugsweise gleichmäßig über den entsprechenden Abschnitt der Umfangsfläche des Trommelmantels verteilt.

Um eine ausreichend hohe Trennleistung der in dem inneren Behälter enthaltenen aufgelösten Mischung in eine faserstoffreiche Fraktion und in eine faserstoffarme Fraktion zu erreichen, wird es in Weiterbildung des Erfindungsgedankens vorgeschlagen, dass die Summe der Flächen der Öffnungen der einzelnen Sieblöcher bezogen auf die Gesamtfläche des Abschnitts der Umfangsfläche des Trommelmantels, in dem diese vorgesehen sind, 5 bis 95 %, bevorzugt 15 bis 75 % und besonders bevorzugt 20 bis 50 % beträgt. Als Abschnitt der Umfangsfläche des Trommelmantels, in dem die Sieblöcher vorgesehen sind, wird dabei derjenige Abschnitt des Trommelmantels verstanden, welcher durch rechtwinkliges Schneiden des Trommelmantels an den beiden Punkten, an denen die auf der Umfangsfläche - in Längsrichtung betrachtet - am weitesten auseinanderliegenden Sieblöcher angeordnet sind, erhalten wird. Dabei sind die Sieblöcher auch bei dieser Ausführungsform vorzugsweise gleichmäßig über den entsprechenden Abschnitt der Umfangsfläche des Trommelmantels verteilt.

Zusätzlich zu den auf der Umfangsfläche des Trommelmantels des inneren Behälters angeordneten Sieblöcher können auch auf dem Stirnboden des inneren Behälters wenigstens ein oder mehrere Sieblöcher angeordnet sein. Diese Sieblöcher erlauben insbesondere bei einem sehr hohen Schwenkwinkel von beispielsweise nahe 90° gegenüber der Horizontalen eine Trennung der in dem inneren Behälter enthaltenen aufgelösten Mischung in eine faserstoffreiche Fraktion und in eine faserstoffarme Fraktion, indem faserstoffreiche Fraktion durch diese Sieblöcher abfließt. Alternativ dazu oder zusätzlich dazu kann das Vorsehen von Sieblöchern auch auf dem Stirnboden des inneren Behälters auch eine Vorreinigung des Ausgangsmaterials mit Wasser vor der Auflösung Ausgangsmaterials ermöglichen, indem der innere Behälter mit Ausgangsmaterial und Wasser befüllt und bei einem sehr hohen Schwenkwinkel in einer der Umfangsrichtungen gedreht wird, wobei Wasser mit den herausgelösten Verunreinigungen, wie Fett, durch die auf dem Stirnboden vorgesehenen Sieblöcher abläuft. Desweiteren kann das Vorsehen von Sieblöchern auf dem Stirnboden des inneren Behälters auch ein Waschen des aufgelösten Ausgangsmaterials erleichtern, indem der innere Behälter mit dem ausgelösten Ausgangsmaterial mit Wasser befüllt und bei einem sehr hohen Schwenkwinkel in eine der Umfangsrichtungen gedreht wird, wobei Wasser mit den herausgelösten Verunreinigungen durch die auf dem Stirnboden vorgesehenen Sieblöcher abläuft.

Um eine ausreichend gute Reinigung des ggf. bereits aufgelösten Ausgangsmaterials mit Wasser und/oder eine ausreichend hohe Trennleistung der in dem inneren Behälter enthaltenen aufgelösten Mischung in eine faserstoffreiche Fraktion und in eine faserstoffarme Fraktion zu erreichen, ist es bevorzugt, dass die Flächen der Öffnungen der einzelnen Sieblöcher - und zwar sowohl der auf der Umfangsfläche des Trommelmantels des inneren Behälters angeordneten als auch der etwaig auf dem Stirnboden des inneren Behälters angeordneten - jeweils 0,03 bis 20 cm², bevorzugt 0,2 bis 10 cm² und besonders bevorzugt 0,12 bis 5 cm² betragen. Dabei sind die Sieblöcher auch bei dieser Ausführungsform vorzugsweise gleichmäßig über den entsprechenden Abschnitt der Umfangsfläche des Trommelmantels bzw. den Stirnboden des inneren Behälters verteilt.

Grundsätzlich ist die vorliegende Erfindung bezüglich der Geometrie der Sieblöcher nicht besonders limitiert. Allerdings haben sich beispielsweise Sieblöcher mit einem elliptischen, kreisrunden, rechteckigen oder quadratischen Querschnitt für ihren Zweck als besonders geeignet erwiesen.

Beispielsweise haben sich Sieblöcher mit einem kreisrunden Querschnitt mit einem Durchmesser von jeweils 0,2 bis 5 cm, bevorzugt 0,35 bis 2,5 cm und besonders bevorzugt 0,4 bis 1,8 cm als besonders geeignet erwiesen. Dabei sind die Sieblöcher auch bei dieser Ausführungsform vorzugsweise gleichmäßig über den entsprechenden Abschnitt der Umfangsfläche des Trommelmantels verteilt.

Gemäß einer weiteren bevorzugten Ausführungsform der vorliegenden Erfindung ist es vorgesehen, dass der äußere Behälter den Trommelmantel des inneren, trommelartigen Behälters, ausgehend von dem mit dem Stirnboden versehenen Ende in der Längsachse des Trommelmantels gesehen, um wenigstens 50 %, besonders bevorzugt um wenigstens 70 % und ganz besonders bevorzugt um wenigstens 80 % vollflächig umgibt. Dadurch wird ein ausreichend großer Zwischenraum zwischen dem inneren und äußeren Behälter zur Ausnahme der faserstoffreichen Fraktion sichergestellt. In diesem Zusammenhang bedeutet vollflächig, dass das mit dem Stirnboden versehene Ende des inneren Behälters und der vorgennannte Längenabschnitt der gesamten Umfangsfläche des Trommelmantels von dem äußerem Behälter vollständig, d.h. vollflächig, umgeben ist.

Grundsätzlich kann der äußere Behälter des Doppelbehälters jede beliebige Geometrie aufweisen. Insbesondere kann dieser hohlzylindrisch oder kegelstumpfartig ausgebildet sein.

In Weiterbildung des Erfindungsgedankens wird es vorgeschlagen, dass der äußere Behälter die Form eines asymmetrischen Kegelstumpfes aufweist, wobei ein Abschnitt der Umfangsfläche des asymmetrischen Kegelstumpfes zu der Grundfläche des asymmetrischen Kegelstumpfes einen Winkel ß₁ von 80 bis 100° aufweist und der andere Abschnitt der Umfangsfläche des asymmetrischen Kegelstumpfes zu der Grundfläche des asymmetrischen Kegelstumpfes einen Winkel ß₂ von 60 bis 80° aufweist. Dadurch wird erreicht, dass ein Teilbereich des äußeren Behälters an dem mit dem Stirnboden versehenen Ende des inneren Behälters "bauchig" ausgebildet ist, und zwar vorzugsweise auf der Unterseite des Doppelbehälters, so dass sich bei dem Drehen des inneren Behälters durch die Sieblöcher in den Zwischenraum fließende Flüssigkeit in diesem "Bauchbereich" sammelt und von dort abgezogen werden kann. Im Gegensatz zu dem inneren Behälter wird der äußere Behälter bei dem Betrieb des Doppelbehälters nicht gedreht.

Gute Ergebnisse werden diesbezüglich insbesondere erreicht, wenn der Winkel ß₁ 85 bis 95° und bevorzugt etwa 90° beträgt und/oder der Winkel ß₂ 65 bis 75° und bevorzugt etwa 70° beträgt.

Grundsätzlich kann das Ende des äußeren Behälters, welches dem mit dem Stirnboden versehenen Ende des Trommelmantels benachbart ist, auf jede beliebige Art verschlossen sein. Gute Ergebnisse werden insbesondere erhalten, wenn der äußere Behälter an seinem dem mit dem Stirnboden versehenen Ende des Trommelmantels des inneren trommelartigen Behälters zugewandten Ende durch einen Klöpperboden begrenzt wird. In diesem Fall werden die vorstehend beschriebenen Winkel ß₁ und ß₂ ausgehend von der Ebene der obersten Umrandung des Klöpperbodens aus berechnet.

Grundsätzlich ist die vorliegende Erfindung bezüglich des Volumens des zwischen dem äußeren und dem inneren Behälters vorgesehenen Zwischenraums nicht besonders beschränkt. Allerdings sollte dieses so groß sein, dass dort eine ausreihende Menge Flüssigkeit gesammelt werden kann, aber so gering wie möglich, damit die Vorrichtung möglichst kompakt bleibt. Unter Berücksichtigung dessen hat es sich als vorteilhaft erwiesen, dass der minimale Abstand zwischen der äußeren Oberfläche des inneren, trommelartigen Behälters und der inneren Oberfläche des äußeren Behälters 5 bis 75 cm und bevorzugt 8 bis 30 cm beträgt. Dabei wird unter minimalem Abstand der Abstand an der engsten Stelle des Zwischenraums verstanden.

Aus dem gleichen Grund ist es bevorzugt, dass der maximale Abstand zwischen der äußeren Oberfläche des inneren, trommelartigen Behälters und der inneren Oberfläche des äußeren Behälters 15 bis 100 cm und bevorzugt 10 bis 50 cm beträgt. In diesem Zusammenhang wird unter maximalem Abstand der Abstand an der breitesten Stelle des Zwischenraums verstanden.

Gemäßer einer weiteren vorteilhaften Ausgestaltung der vorliegenden Erfindung ist es vorgesehen, dass auf der inneren Oberfläche des inneren, trommelartigen Behälters wenigstens ein Ablenkmittel vorgesehen ist. Dies erlaubt es, nach dem Auflösen des Ausgangsmaterials und nach dem Abtrennen der faserstoffreichen Fraktion die verbliebene Kunststoff enthaltende faserstoffarme Fraktion, welche eine breiartige Konsistenz aufweist, leicht aus dem Innenraum des inneren Behälters zu entnehmen.

Gute Ergebnisse werden dabei beispielsweise erzielt, wenn das wenigstens eine Ablenkmittel spiralförmig ausgestaltet ist und sich vorzugsweise über wenigstens 50 %, besonders bevorzugt über wenigstens 70 %, ganz besonders bevorzugt über wenigstens 90 % und höchst bevorzugt über die gesamte Länge des trommelartigen Behälters erstreckt. Das Ablenkmittel weist bei dieser Ausführungsform vorzugsweise einen rechteckigen oder dreieckigen Querschnitt auf.

Ein weiterer Gegenstand der vorliegenden Erfindung ist eine Anlage zum Aufbereiten von faserhaltigen Verbundwerkstoffen, insbesondere von faserhaltigen Verpackungsmaterialien, welche umfasst:
- eine zuvor beschriebene erfindungsgemäße Vorrichtung,
- eine Fest-Flüssig-Trenneinrichtung sowie
- eine Presse.

Dabei ist die Fest-Flüssig-Trenneinrichtung vorzugsweise über eine Leitung mit dem Zwischenraum des Doppelbehälters der Vorrichtung verbunden, so dass bei dem Betrieb der Anlage die faserstoffreiche Fraktion aus dem Zwischenraum kontinuierlich oder chargenweise - geregelt oder ungeregelt - in die Fest-Flüssig-Trenneinrichtung geleitet werden kann, wo diese dann eingedickt wird, also in reines oder nahezu reines Wasser und in eingedickte Faserstoffsuspension getrennt wird. Während die eingedickte Faserstoffsuspension als recycelter Rohstoff aus der Anlage entnommen und ggf. weiter gereinigt werden kann, kann das Wasser in die erfindungsgemäße Vorrichtung der erfindungsgemäßen Anlage zurückgeführt werden. Zu diesem Zweck ist es bevorzugt, dass in der Anlage eine Flüssigkeitsrückführleitung vorgesehen ist, welche von der Fest-Flüssig-Trenneinrichtung in den hohlzylindrischen Trommelmantel des inneren trommelartigen Behälters führt.

Um eine gute Fest-Flüssig-Trennung zu erreichen, ist es bevorzugt, dass die Fest-Flüssig-Trenneinrichtung ein Eindicker, Entwässerungstisch oder Sieb und besonders bevorzugt ein Scheibeneindicker ist.

Zur weiteren Reinigung der in der Fest-Flüssig-Trenneinrichtung erhalten Flüssigkeit, also des Filtrats, beispielsweise von Fett, Milchresten oder dergleichen kann die erfindungsgemäße Anlage ferner eine chemisch physikalische Trenneinrichtung, wie zum Beispiel eine Druckentspannungsflotationseinrichtung, Zentrifugeneinrichtung oder Sedimentationseinrichtung umfassen, welche über eine entsprechende Flüssigkeitsleitung mit der Fest-Flüssig-Trenneinrichtung verbunden sein kann.

Um eine besonders wirksame Trocknung des Kunststoff und ggf. Metall enthaltenden Breis, welcher dem Doppelbehälter aus dem Innenraum des inneren Behälters entnommen wird, zu erreichen, ist es vorteilhaft, in den Anlage als Presse eine Schneckenpresse oder Stempelpresse vorzusehen und diese über eine Leitung mit dem Innenraum des hohlzylindrischen Trommelmantels des inneren trommelartigen Behälters zu verbinden.

Ferner betrifft die vorliegende Erfindung ein Verfahren zum Aufbereiten von faserhaltigen Verbundwerkstoffen, insbesondere von faserhaltigen Verpackungsmaterialien, welches die folgenden Schritte umfasst:
a) Schwenken des Doppelbehälters einer zuvor beschriebenen erfindungsgemäßen Vorrichtung mit dem dem mit dem Stirnboden versehenen Ende gegenüberliegenden Ende des inneren Behälters nach oben, so dass die Längsachse des trommelartigen Behälters bezogen auf die Horizontalebene einen Winkel γ₁ von 5 bis 90° einnimmt,
b) Einführen von aufzubereitendem faserhaltigen Verbundwerkstoff und von Wasser in den Innenraum des hohlzylindrischen Trommelmantels des in dem Schritt a) geschwenkten inneren Behälters und Drehen des inneren Behälters um eine seiner beiden Umfangsrichtungen für eine Zeitspanne t₁,
c) Verringern des Schwenkwinkels des Doppelbehälters auf einen auf die Horizontalebene bezogenen Winkel γ₂, wobei 0≤γ₂<γ₁, und Drehen des inneren trommelartigen Behälters um eine seiner beiden Umfangsrichtungen für eine Zeitspanne t₂,
d) optional Vergrößern des Schwenkwinkels des Doppelbehälters auf einen auf die Horizontalebene bezogenen Winkel γ₃, wobei γ₂<γ₃≤90°, Einführen von Wasser in den hohlzylindrischen Trommelmantel des inneren Behälters und Drehen des inneren Behälters um dessen Längsachse für eine Zeitspanne t₃ sowie
e) Verringern des Schwenkwinkels des Doppelbehälters auf einen auf die Horizontalebene bezogenen Winkel von 0° und Entnehmen des verbliebenen Breis aus dem hohlzylindrischen Trommelmantel des inneren trommelartigen Behälters.

Gute Ergebnisse werden dabei insbesondere erhalten, wenn der Winkel γ₁ in dem Schritt a) und/oder der Winkel γ₃ in dem Schritt d) auf einen Wert von 5 bis 60°, bevorzugt von 10 bis 50° und besonders bevorzugt von 15 bis 50°, wie ganz besonders bevorzugt etwa 40°, eingestellt wird.

Um eine ausreichende Auflösung des Ausgangsmaterials in dessen Bestandteile und/oder eine ausreichende Wascheffizienz zu erreichen, wird es in Weiterbildung des Erfindungsgedankens vorgeschlagen, dass die Zeitspanne t₁ in dem Schritt b) und/oder die Zeitspanne t₃ in dem Schritt d) auf 5 bis 180 Minuten und bevorzugt auf 10 bis 90 Minuten eingestellt wird.

Eine gute Abtrennung der faserstoffreichen Fraktion wird in dem Schritt c) insbesondere erhalten, wenn der Winkel γ₂ auf einen Wert von 10 bis 50°, bevorzugt von 20 bis 40° und besonders bevorzugt von 25 bis 35° eingestellt wird.

Dabei kann die Zeitspanne t₂ in dem Schritt c) mit Vorteil beispielsweise auf 5 bis 180 Minuten und bevorzugt auf 10 bis 90 Minuten eingestellt werden.

Die faserstoffhaltige Suspension kann aus dem Zwischenraum des Doppelbehälters kontinuierlich oder chargenweise abgezogen werden, und zwar beispielsweise während dem Schritt b) und/oder zwischen den Schritten b) und c) und/oder während dem Schritt c) und/oder zwischen den Schritten c) und d) und/oder während dem Schritt d) und/oder zwischen den Schritten d) und e) und/oder nach dem Schritt e).

Gemäß einer anderen bevorzugten Ausführungsform der vorliegenden Erfindung wird die faserstoffhaltige Suspension in die Fest-Flüssig-Trenneinrichtung geführt und dort in eine wasserreiche Fraktion und eine faserreiche Fraktion getrennt, wobei die wasserreiche Fraktion vorzugsweise in den Innenraum des hohlzylindrischen Trommelmantels des inneren trommelartigen Behälters zurückgeführt wird und die wasserreiche Fraktion vorzugsweise in eine Reinigungseinrichtung geführt wird, um diese weiter zu reinigen. Bei der Fest-Flüssig-Trenneinrichtung kann es sich mit Vorteil um einen Eindicker, Entwässerungstisch oder Sieb und insbesondere um einen Scheibeneindicker handeln, wohingegen die Reinigungseinrichtung beispielsweise eine Druckentspannungsflotationseinrichtung sein kann.

Vorzugsweise wird der in dem Schritt e) entnommene verbliebene Brei in eine Presse geführt und dort getrocknet.

Gemäß einer weiteren, ganz besonders bevorzugten Ausführungsform der vorliegenden Erfindung wird in dem Schritt b) auch eine Vorreinigung des Ausgangsmaterials durchgeführt und hierzu werden vorzugsweise in dem Stirnboden des inneren Behälters des Doppelbehälters der Vorrichtung Sieblöcher vorgesehen. Bei dem Drehen des inneren Behälters in dem Schritt b) wäscht das Wasser dann Verunreinigungen, wie Fett, von dem Ausgangsmaterial ab und das Waschwasser wird über die in dem Stirnboden angeordneten Sieblöcher abgezogen, bevor dann frisches Wasser in den inneren Behälter nachgefüllt wird und der innere Behälter - ggf. bei einem geringeren Schwenkwinkel - weiter gedreht wird, um das Ausgangsmaterial in die einzelnen Bestandteile aufzulösen.

In Weiterbildung des Erfindungsgedankens wird es vorgeschlagen, dass das Verfahren in einer Vorrichtung durchgeführt wird, welche asymmetrische Schikane(n) umfasst, und die Drehrichtung des inneren Behälters der Vorrichtung während des Verfahrens geändert wird. Vorzugsweise weist wenigstens eine Schikane einen keilförmigen Querschnitt auf, der von der von der Mittellängsachse des Trommelmantels in radialer Richtung durch die Keilspitze verlaufenden Gerade in zwei Teile geteilt wird, wobei sich der erste Winkel α₁ zwischen der von der von der Mittellängsachse des Trommelmantels in radialer Richtung durch die Keilspitze verlaufenden Gerade und der den ersten Teil der Schikane ausgehend von der Keilspitze begrenzenden Linie von dem zweiten Winkel α₂ zwischen der von der von der Mittellängsachse des Trommelmantels in radialer Richtung durch die Keilspitze verlaufenden Gerade und der den zweiten Teil der Schikane ausgehend von der Keilspitze begrenzenden Linie unterscheidet. Dabei beträgt der erste Winkel α₁ vorzugsweise zwischen mehr als 90 und 140° und beträgt der zweite Winkel α₂ vorzugsweise zwischen 40 und 80°. In diesem Fall weist die wenigstens eine Schikane eine vergleichsweise scharfe Seite auf, nämlich die mit dem Winkel zwischen mehr als 90 und 140°, und eine vergleichsweise "sanfte" Seite, nämlich die mit dem Winkel zwischen 40 und 80°. Auf diese Weise wird bei der Durchführung des Verfahrens, wenn der innere Behälter in einer ersten Umfangsrichtung des Trommelbehälters gedreht wird, in der die Mischung der scharfen Seite der Schikane(n) ausgesetzt ist, die in dem Trommelbehälter enthaltene Mischung mechanisch so stark beansprucht, dass eine optimale Auflösung des faserhaltigen Verbundwerkstoffs mit Wasser stattfindet, wohingegen die Schikane(n), wenn der innere Behälter in entgegengesetzter Umfangsrichtung des Trommelbehälters gedreht wird, in der die Mischung der sanften Seite der Schikane(n) ausgesetzt ist, die in dem Trommelbehälter enthaltene Mischung mechanisch nur schwach beansprucht, sondern lediglich gut vermischt wird, so dass das Wasser den darin enthaltenen Feststoff wäscht, ohne den faserhaltigen Verbundwerkstoff merklich aufzulösen.

Insbesondere eignet sich das erfindungsgemäße Verfahren zum Aufbereiten von Verbundwerkstoff, welcher i) Fasermaterial, vorzugsweise in der Form von Pappe oder Papier, ii) Kunststoff, vorzugsweise Polyethylen, und optional iii) Aluminiumfolie enthält. Vorzugsweise wird daher in dem Schritt b) entsprechendes faserhaltiges Verpackungsmaterial in den trommelartigen Behälter eingeführt.

Insbesondere können in dem Schritt b) gebrauchte Getränkeverpackungen eingesetzt werden.

Nachfolgend wird die vorliegende Erfindung rein beispielhaft anhand vorteilhafter Ausführungsformen und unter Bezugnahme auf die beigefügten Zeichnungen beschrieben.

Dabei zeigen:
- Fig. 1: eine schematische perspektive Ansicht einer Vorrichtung zum Aufbereiten von faserhaltigen Verbundwerkstoffen gemäß eines Ausführungsbeispiels der vorliegenden Erfindung,
- Fig. 2: eine Längsschnittansicht der in der Fig. 1 dargestellten Vorrichtung,
- Fig. 3: eine Querschnittsansicht der in den Fig. 1 und 2 dargestellten Vorrichtung entlang der in der Fig. 2 gezeigten Schnittebene A-A sowie
- Fig. 4: eine schematische Ansicht einer Anlage zum Aufbereiten von faserhaltigen Verbundwerkstoffen gemäß eines Ausführungsbeispiels der vorliegenden Erfindung.

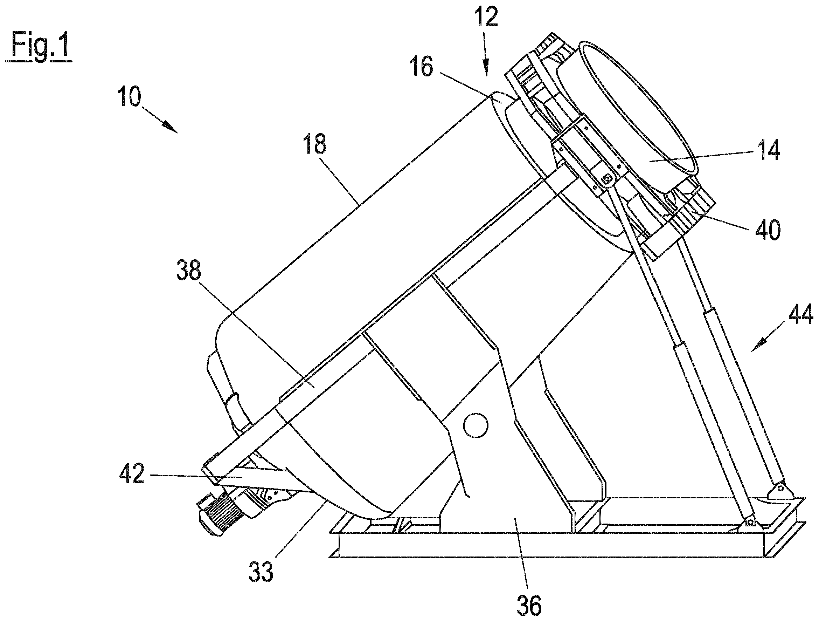

Die in den Fig. 1 bis 3 gezeigte Vorrichtung 10 zum Aufbereiten von faserhaltigen Verbundwerkstoffen umfasst einen Doppelbehälter 12, welcher einen inneren trommelartigen Behälter 14 sowie einen äußeren Behälter 16 umfasst.

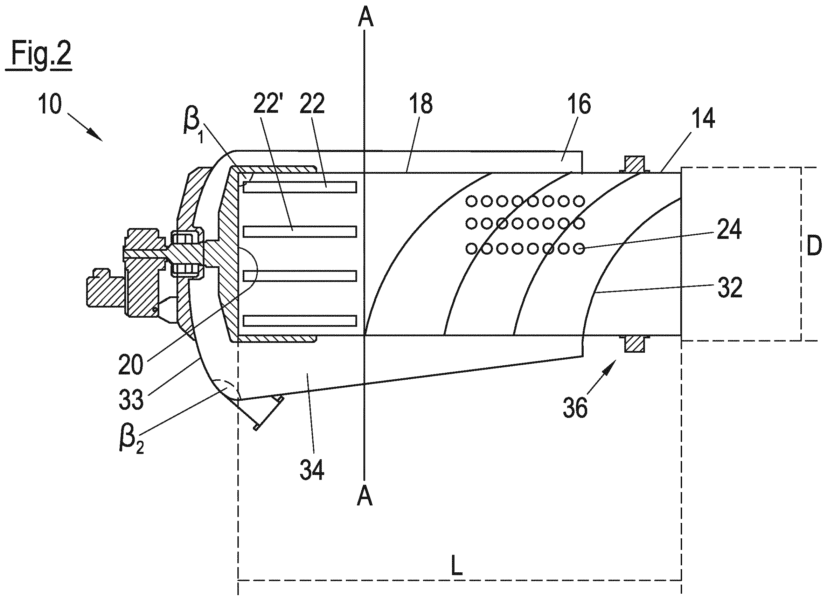

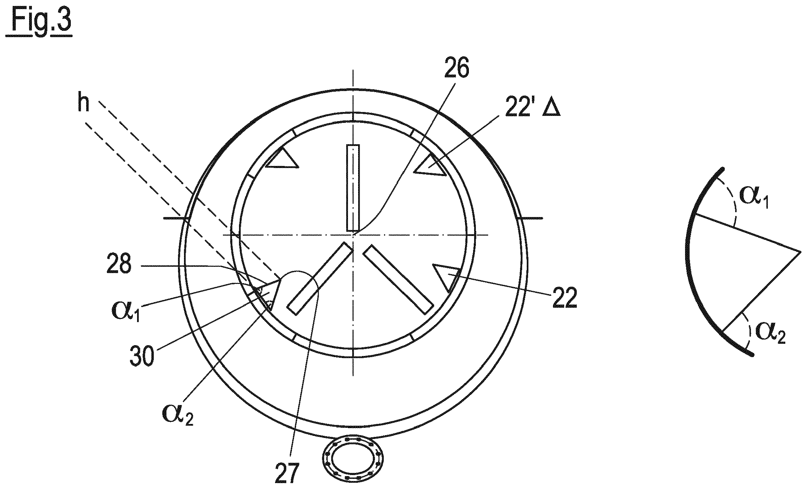

Wie insbesondere aus der Fig. 2 hervorgeht, ist der innere trommelartige Behälter 14 hohlzylindrisch ausgestaltet und umfasst einen hohlzylindrischen Trommelmantel 18, welcher an einer seiner beiden Stirnseiten mit einem Stirnboden 20 geschlossen ist und an seiner gegenüberliegenden Stirnseite offen ist. Dabei weist der Trommelmantel 18 an seinem dem Stirnboden 20 benachbarten Ende einen Abschnitt auf, an dem an der Innenseite der Umfangsfläche des Trommelmantels 18 mehrere Schikanen 22, 22' angeordnet sind, die sich in der Längsrichtung des Trommelmantels 18 erstrecken, und zwar ausgehend von dem Stirnboden über etwa 40 % der Länge des Trommelmantels 18, d.h. die Schikanen 22, 22' erstrecken sich - ausgehend von dem mit dem Stirnboden 20 versehenen Ende in der Längsachse des Trommelmantels 18 gesehen - über 5 bis 35 % der länglichen Ausdehnung des Trommelmantels 18. Wie in der Fig. 3 dargestellt, sind in diesem Abschnitt vier Schikanen 22, 22' vorgesehen, welche gleichmäßig über die Innenfläche des Trommelmantels 18 verteilt sind. Dabei weisen die einzelnen Schikanen 22, 22' einen asymmetrischen Querschnitt auf. Im Speziellen weisen die Schikanen 22, 22' einen keilförmigen Querschnitt auf, der von der von der Mittellängsachse 26 des Trommelmantels 18 in radialer Richtung durch die Keilspitze 27 verlaufenden Gerade in zwei Teile 28, 30 geteilt wird, wobei sich der erste Winkel α₁ zwischen der von der von der Mittellängsachse 26 des Trommelmantels 18 in radialer Richtung durch die Keilspitze verlaufenden Gerade und der den ersten Teil 28 der Schikane 22 ausgehend von der Keilspitze begrenzenden Linie von dem zweiten Winkel α₂ zwischen der von der von der Mittellängsachse 26 des Trommelmantels 18 in radialer Richtung durch die Keilspitze verlaufenden Gerade und der den zweiten Teil 30 der Schikane 22 ausgehend von der Keilspitze begrenzenden Linie unterscheidet. Dadurch wird erreicht, dass in Abhängigkeit von der Drehrichtung des inneren Behälters 14 auf die darin enthaltene Mischung unterschiedliche mechanische Beanspruchungen ausgeübt werden. Dabei weisen die Schikanen 22, 22' eine Höhe h von 5 cm auf, wobei die Höhe h von der Keilspitze bis zu dem lotrecht darunter liegenden Punkt auf der Umfangsfläche des Trommelmantels 18 bestimmt wird. An seinem Stirnboden 20 ist der innere Behälter 14 mit einer Drehachse und einem Drehmotor verbunden, über die der innere Behälter stufenweise in beide Umfangsrichtungen des inneren Behälters 14 gedreht werden kann.

Zudem weist der Trommelmantel 18 an seinem dem Stirnboden 20 gegenüberliegenden Ende einen Abschnitt auf, an dem in der Umfangsfläche des Trommelmantels 18 mehrere Sieblöcher 24, die sich - ausgehend von dem mit dem Stirnboden 20 versehenen Ende in der Längsachse des Trommelmantels 18 gesehen - über 50 bis 80 % der länglichen Ausdehnung des Trommelmantelumfangs erstrecken. Dabei sind die einzelnen Sieblöcher 24 über diesen Abschnitt der Umfangsfläche des Trommelmantels 18 gleichmäßig verteilt und weisen jeweils einen kreisrunden Querschnitt auf, der hinsichtlich seines Durchmessers so bemessen ist, dass faserstoffreiche Fraktion durch die Sieblöcher 24 hindurch treten kann, nicht aber der in dem inneren Behälter 14 gebildete Brei aus faserfreiem Restmaterial, wie Kunststoff und ggf. Metall.

Außerdem weist der Trommelmantel 18 auf seiner inneren Oberfläche ein Ablenkmittel 32 auf, welches spiralförmig ausgestaltet ist und sich über fast die gesamte Länge des trommelartigen Behälters 18 erstreckt.

Der äußere Behälter 16 weist die Form eines asymmetrischen Kegelstumpfes auf, wobei die obere Hälfte der Umfangsfläche des asymmetrischen Kegelstumpfes zu der Grundfläche des asymmetrischen Kegelstumpfes einen Winkel ß₁ von etwa 90° aufweist und die untere Hälfte der Umfangsfläche des asymmetrischen Kegelstumpfes zu der Grundfläche des asymmetrischen Kegelstumpfes einen Winkel ß₂ von etwa 70° aufweist.

Dabei ist der äußere Behälter 16 so angeordnet, dass er den Trommelmantel 18 des inneren Behälters 14, ausgehend von dem mit dem Stirnboden 20 versehenen Ende in der Längsachse des Trommelmantels 18 gesehen, um etwa 80 % vollflächig umgibt. An seinem dem mit dem Stirnboden 20 versehenen Ende des Trommelmantels 18 des inneren trommelartigen Behälters 14 zugewandten Ende ist der äußere Behälter 16 durch einen Klöpperboden 33 begrenzt.

Ferner ist der äußere Behälter 16 so angeordnet, dass sich zwischen der äußeren Oberfläche des inneren Behälters 14 und der inneren Oberfläche des äußeren Behälters 16 ein Zwischenraum 34 ausbildet.

Erfindungsgemäß ist der Doppelbehälter 12 in der Vertikalebene schwenkbar. Dies wird in dem in den Fig. 1 bis 3 gezeigten Ausführungsbeispiel dadurch erreicht, dass der Doppelbehälter 12 auf einem schwenkbaren Gestell 36 gelagert ist. Dabei umfasst das Gestell 36 zwei Arme 38, welche parallel zu der Längsrichtung des äußeren Behälters 16 verlaufen. An dem dem Stirnboden 20 des inneren Behälters 14 gegenüberliegenden Ende sind die beiden Arme 38 über einen Querträger 40 verbunden, auf dem das dem Stirnboden 20 gegenüberliegende Ende des inneren Behälters 14 aufliegt. An dem diesem Querträger 40 gegenüberliegenden Ende sind die Arme 38 des Gestells ebenfalls durch einen Querträger 42 verbunden, welcher mit einem Schwenkmechanismus 44 verbunden ist, über welchen der Schwenkwinkel des Doppelbehälters 12 eingestellt werden kann.

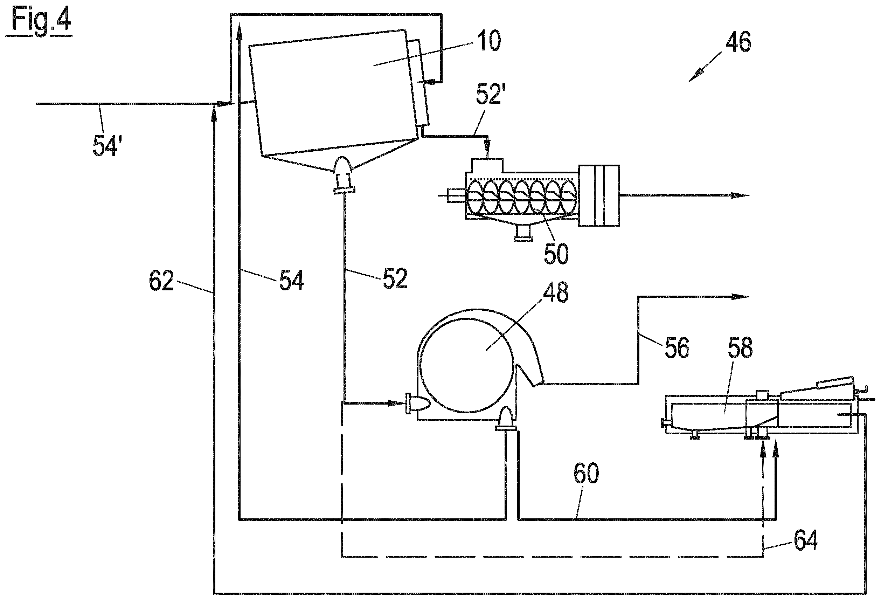

Die in der Fig. 4 gezeigte Anlage 46 zum Aufbereiten von faserhaltigen Verbundwerkstoffen umfasst eine wie in den Fig. 1 bis 3 gezeigt und vorstehend beschrieben ausgestaltete Vorrichtung 10, eine Fest-Flüssig-Trenneinrichtung 48 in Form eines Scheibeneindickers sowie eine Presse 50 in Form einer Schneckenpresse.

Dabei ist die Fest-Flüssig-Trenneinrichtung 48 über eine Leitung 52 mit dem Zwischenraum 34 des Doppelbehälters 12 der Vorrichtung 10 verbunden, wobei der Fest-Flüssig-Trenneinrichtung 48 über die Leitung 52 kontinuierlich oder chargenweise aus dem Zwischenraum 34 des Doppelbehälters 12 der Vorrichtung 10 abgezogene faserstoffreiche Fraktion zugeführt wird. Die faserstoffreiche Fraktion wird in der Fest-Flüssig-Trenneinrichtung 48 in Wasser sowie eine eingedickte faserstoffreiche Suspension aufgetrennt, wobei das Wasser von der Fest-Flüssig-Trenneinrichtung 48 in den hohlzylindrischen Trommelmantel 18 des inneren trommelartigen Behälters 14 über eine Flüssigkeitsrückführleitung 54 zurückgeführt wird, und zwar zusammen mit Frischwasser, welches über die Leitung 54' zugeführt wird. Hingegen wird die eingedickte faserstoffreiche Suspension über eine Faserabfuhrleitung 56 als Wertstoff 1 zur Wiederverwendung z.B. in eine Papierfabrik geführt.

Das Filtrat der Fest-Flüssig-Trenneinrichtung 48 wird über die Flüssigkeitsleitung 60 zu einer Druckentspannungsfiltrationseinrichtung 58 geführt und dort weiter gereinigt, so dass aus der Druckentspannungsfiltrationseinrichtung 58 Wasser mit Frischwasserqualität abgezogen und über die Frischwasserrückführleitung 62 in die Vorrichtung 10 zurückgeführt wird. Dadurch kann der Verbrauch von über die Leitung 54' zugeführten Frischwasser erheblich reduziert werden, was zu signifikanten Kosteneinsparungen führt.

Aus dem Innenraum des inneren trommelartigen Behälters 14 wird am Ende des Prozesses ein Kunststoff und ggf. Metall enthaltender Breis abgeführt und über die Leitung 52' in die Schneckenpresse 50 geführt und zu dem Kunststoff enthaltenden Wertstoff 2 getrocknet.

Zudem kann die Anlage 46 eine Bypassleitung 64 umfassen, über welche aus dem Zwischenraum 34 der Vorrichtung 10 abgezogenes Waschwasser direkt, d.h. ohne Durchlaufen der Fest-Flüssig-Trenneinrichtung 48, in die Druckentspannungsflotationseinrichtung 34 zur Reinigung zugeführt werden kann. Ein solche Bypassleitung 64 ist insbesondere dann sinnvoll, wenn eine wie untenstehend beschrieben Vorreinigung des Ausgangsmaterials in der Vorrichtung 10 stattfinden soll.

Bei dem Betrieb der Anlage 46 wird zunächst der Doppelbehälter 12 mit dem dem mit dem Stirnboden 20 versehenen Ende gegenüberliegenden Ende des inneren Behälters 14 nach oben geschwenkt, so dass die Längsachse des trommelartigen Behälters bezogen auf die Horizontalebene einen Winkel γ₁ von 5 bis 90° einnimmt. Dann werden in den Innenraum des hohlzylindrischen Trommelmantels 18 des in dem Schritt a) geschwenkten inneren Behälters 14 der aufzubereitende faserhaltige Verbundwerkstoff und viel Wasser eingefüllt und wird der faserhaltige Verbundwerkstoff vorgereinigt und dabei insbesondere von Fett und Milchresten befreit. Hierzu wird der innere Behälter 14 zunächst langsam in einer seiner beiden Umfangsrichtungen gedreht und dann das Waschwasser, welches während des Drehens über die Sieblöcher 24 und/oder über an dem Stirnboden 20 des inneren Behälters 20 vorgesehene Sieblöcher (nicht dargestellt) in den Zwischenraum 34 des Doppelbehälters 12 geströmt ist, aus dem Zwischenraum 34 abgezogen und direkt über die Bypassleitung 64 der Druckentspannungsfiltrationseinrichtung 58 zur Reinigung zugeführt. Das gereinigte Wasser wird dann über die Frischwasserrückführleitung 62 in die Vorrichtung 10 zurückgeführt.

Anschließend wird der innere Behälter 14 für eine Zeitspanne t₁ um eine seiner beiden Umfangsrichtungen gedreht. Bei dem Drehen wird das Wasser intensiv mit dem aufzubereitenden faserhaltigen Verbundwerkstoff vermischt und durch die Schikanen 22, 22' mechanisch beansprucht, was das Auflösen des faserhaltigen Verbundwerkstoff in dessen Bestandteile Fasermaterial, Kunststoff und ggf. Metall begünstigt. Gleichzeitig werden noch etwaig verbliebene organische Verunreinigungen aus dem Verbundwerkstoff ausgespült. Nach diesem Auflösungsschritt wird der Schwenkwinkel des Doppelbehälters 12 auf einen auf die Horizontalebene bezogenen Winkel γ₂ verringert, wobei 0≤γ₂<γ₁, und der inneren trommelartigen Behälter 14 für eine Zeitspanne t₂ um eine seiner beiden Umfangsrichtungen gedreht. Dabei werden die Schikanen 22, 22' zumindest teilweise freigelegt, so dass die in dem Innenraum des inneren Behälters 14 vorhandenen Mischung noch stärker mechanisch beansprucht wird, wenn diese über die Schikanen 22, 22 läuft. Zudem kontaktiert durch die Verringerung des Schwenkwinkels die in dem Innenraum des inneren Behälters 14 vorhandenen Mischung auch den Abschnitt des Trommelmantels 18, in dem die Sieblöcher 24 vorgesehen sind, so dass faserstoffreiche Fraktion durch die Sieblöcher 24 in den Zwischenraum 34 strömt und in dem Innenraum des inneren Behälters 14 eine kunststoffreiche und ggf. metallreiche breiartige Fraktion verbleibt.

Daran anschließend kann optional der Schwenkwinkel des Doppelbehälters 12 wieder vergrößert werden, und zwar auf einen auf die Horizontalebene bezogenen Winkel γ₃, wobei γ₂<γ₃≤90°, bevor Wasser zum Nachspülen in den hohlzylindrischen Trommelmantel 18 des inneren Behälters 14 eingeführt wird und der innere Behälter 14 für eine Zeitspanne t₃ um dessen Längsachse gedreht wird. Schließlich wird nach der Zeitspanne t₃ der Schwenkwinkel des Doppelbehälters 12 auf einen auf die Horizontalebene bezogenen Winkel von 0° verringert, also der Doppelbehälter 12 horizontal gestellt, und der verbliebene Brei aus dem hohlzylindrischen Trommelmantel 18 des inneren trommelartigen Behälters 14 entnommen.

Der Brei und die faserstoffreiche Fraktion werden dann in der Presse bzw. dem Eindicker weiter aufbereitet, wie dies vorstehend beschrieben ist.

### Bezugszeichenliste

- 10: Vorrichtung zum Aufbereiten von faserhaltigen Verbundwerkstoffen
- 12: Doppelbehälter
- 14: innerer trommelartiger Behälter
- 16: äußerer Behälter
- 18: hohlzylindrischer Trommelmantel
- 20: Stirnboden
- 22, 22': Schikane
- 24: Siebloch
- 26: Mittellängsachse
- 27: Keilspitze
- 28: erster Teil des Sieblochs
- 30: zweiter Teil des Sieblochs
- 32: Ablenkmittel
- 33: Klöpperboden
- 34: Zwischenraum
- 36: Gestell
- 38: Gestellarm
- 40: Querträger
- 42: Querträger
- 44: Schwenkmechanismus
- 46: Anlage zum Aufbereiten von faserhaltigen Verbundwerkstoffen
- 48: Fest-Flüssig-Trenneinrichtung/Scheibeneindicker
- 50: Presse/Schneckenpresse
- 52, 52': Leitung
- 54: Flüssigkeitsrückführleitung
- 54': Frischwasserzufuhrleitung
- 56: Faserabfuhrleitung
- 58: Reinigungseinrichtung/Druckentspannungsfiltrationseinrichtung
- 60: Flüssigkeitsleitung
- 62: Frischwasserrückführleitung
- 64: Bypassleitung

- α₁: Winkel des ersten Teils der Schikane
- α₂: Winkel des zweiten Teils der Schikane
- ß₁: erster Winkel des als asymmetrischer Kegelstumpf ausgebildeten äußeren Behälters
- ß₂: zweiter Winkel des als asymmetrischer Kegelstumpf ausgebildeten äußeren Behälters
- h: Höhe der Schikane
- D: Durchmesser des Trommelmantels
- L: Länge des Trommelmantels

## Patentansprüche

1. Vorrichtung (10) zum Aufbereiten von faserhaltigen Verbundwerkstoffen, insbesondere von faserhaltigen Verpackungsmaterialien, mit einem Doppelbehälter (12), welcher umfasst:
- einen in wenigstens einer seiner beiden Umfangsrichtungen drehbaren inneren trommelartigen Behälter (14) mit einem hohlzylindrischen Trommelmantel (18), der an einer seiner beiden Stirnseiten mit einem Stirnboden (20) geschlossen ist und an seiner gegenüberliegenden Stirnseite offen ist, wobei der Trommelmantel (18) zumindest auf einem Abschnitt seiner Umfangsfläche Sieblöcher (24) aufweist, und wobei zumindest auf einem Abschnitt der Umfangsfläche des Trommelmantels (18) und/oder auf dem Stirnboden (20) wenigstens eine Schikane (22, 22') vorgesehen ist, sowie
- einen äußeren Behälter (16), der den Trommelmantel (18) des inneren, trommelartigen Behälters (14) zumindest teilweise umgibt, so dass sich zwischen der äußeren Oberfläche des inneren, trommelartigen Behälters (14) und der inneren Oberfläche des äußeren Behälters (16) ein Zwischenraum (34) ausbildet, **dadurch gekennzeichnet, dass** der Doppelbehälter (12) in der Vertikalebene schwenkbar ist.

2. Vorrichtung (10) nach Anspruch 1,
**dadurch gekennzeichnet, dass**
der innere trommelartige Behälter (14) in wenigstens einer seiner beiden Umfangsrichtungen mit einer stufenweise einstellbaren Geschwindigkeit drehbar ist, wobei der innere trommelartige Behälter (14) vorzugsweise in beiden seiner beiden Umfangsrichtungen drehbar ist und die Drehrichtung von einer Umfangsrichtung in die andere und umgekehrt geändert werden kann.

3. Vorrichtung (10) nach Anspruch 1 oder 2,
**dadurch gekennzeichnet, dass**
der Doppelbehälter (12) stufenweise um einen Winkel von 0 bis 45° und bevorzugt um 0 bis 90° bezogen auf die Horizontalebene schwenkbar ist, wobei der Doppelbehälter (12) auf einem schwenkbaren Gestell (36) gelagert ist.

4. Vorrichtung (10) nach zumindest einem der vorstehenden Ansprüche,
**dadurch gekennzeichnet, dass**
an der Innenseite zumindest eines Abschnitt der Umfangsfläche des Trommelmantels (18) und/oder auf dem Stirnboden (20) des inneren trommelartigen Behälters (14) wenigstens eine nach innen gerichtete Schikane (22, 22') vorgesehen ist, wobei die wenigstens eine Schikane (22, 22') an der Innenseite eines dem Stirnboden (20) benachbarten Abschnitts der Umfangsfläche des Trommelmantels (18) und/oder auf dem Stirnboden (20) angeordnet ist.

5. Vorrichtung (10) nach Anspruch 4,
**dadurch gekennzeichnet, dass**
die wenigstens eine Schikane (22, 22') oder, falls mehr als eine Schikane vorgesehen ist, zumindest ein Teil der Schikanen an der Innenseite eines Abschnitts der Umfangsfläche des Trommelmantels (18) angeordnet ist, wobei sich der Abschnitt der Umfangsfläche des Trommelmantels (18), ausgehend von dem mit dem Stirnboden (20) versehenen Ende in der Längsachse des Trommelmantels (18) gesehen, über 15 bis 30 %, bevorzugt 10 bis 30 %, besonders bevorzugt 0 bis 40 % und ganz besonders bevorzugt 0 bis 50 % der länglichen Ausdehnung des Trommelmantelumfangs erstreckt.

6. Vorrichtung (10) nach zumindest einem der vorstehenden Ansprüche,
**dadurch gekennzeichnet, dass**
die Sieblöcher (22, 22') auf einem Abschnitt der Umfangsfläche des Trommelmantels (18) des inneren trommelartigen Behälters (14) angeordnet sind, wobei sich der Abschnitt der Umfangsfläche des Trommelmantels (18), ausgehend von dem mit dem Stirnboden (20) versehenen Ende in der Längsachse des Trommelmantels (18) gesehen, über 80 bis 90 %, bevorzugt 70 bis 90 %, besonders bevorzugt 65 bis 95 % und ganz besonders bevorzugt 60 bis 95 % der länglichen Ausdehnung des Trommelmantelumfangs erstreckt.

7. Vorrichtung (10) nach zumindest einem der vorstehenden Ansprüche,
**dadurch gekennzeichnet, dass**
zusätzlich zu den auf der Umfangsfläche des Trommelmantels (18) des inneren Behälters (14) angeordneten Sieblöcher (22, 22') auf dem Stirnboden (20 des inneren Behälters (14) wenigstens ein oder mehrere weitere Sieblöcher angeordnet sind.

8. Vorrichtung (10) nach zumindest einem der vorstehenden Ansprüche,
**dadurch gekennzeichnet, dass**
der äußere Behälter (16) den Trommelmantel (18) des inneren, trommelartigen Behälters (14), ausgehend von dem mit dem Stirnboden (20) versehenen Ende in der Längsachse des Trommelmantels (18) gesehen, um wenigstens 50 %, bevorzugt um wenigstens 70 % und besonders bevorzugt um wenigstens 80 % vollflächig umgibt.

9. Vorrichtung (10) nach zumindest einem der vorstehenden Ansprüche,
**dadurch gekennzeichnet, dass**
auf der inneren Oberfläche des inneren, trommelartigen Behälters (14) wenigstens ein Ablenkmittel (32) vorgesehen ist, wobei das wenigstens eine Ablenkmittel (32) spiralförmig ausgestaltet ist und sich vorzugsweise über wenigstens 50 %, besonders bevorzugt über wenigstens 70 %, ganz besonders bevorzugt über wenigstens 90 % und höchst bevorzugt über die gesamte Länge des inneren trommelartigen Behälters (14) erstreckt.

10. Anlage (46) zum Aufbereiten von faserhaltigen Verbundwerkstoffen, insbesondere von faserhaltigen Verpackungsmaterialien, welche umfasst:
- eine Vorrichtung (10) nach zumindest einem der vorstehenden Ansprüche,
- eine Fest-Flüssig-Trenneinrichtung (48) sowie
- eine Presse (50).

11. Anlage (46) nach Anspruch 10,
**dadurch gekennzeichnet, dass**
die Fest-Flüssig-Trenneinrichtung (48) über eine Leitung (52) mit dem Zwischenraum (34) des Doppelbehälters (12) der Vorrichtung (10) verbunden ist und die Fest-Flüssig-Trenneinrichtung (48) ein Eindicker, Entwässerungstisch oder Sieb und bevorzugt ein Scheibeneindicker ist, wobei von der Fest-Flüssig-Trenneinrichtung (48) eine Flüssigkeitsrückführleitung (54) in den hohlzylindrischen Trommelmantel (18) des inneren trommelartigen Behälters (14) führt, und, wobei die Anlage ferner eine Druckentspannungsflotationseinrichtung (58), Zentrifugeneinrichtung oder Sedimentationseinrichtung umfasst, welche über eine Flüssigkeitsleitung (60) mit der Fest-Flüssig-Trenneinrichtung (48) verbunden ist.

12. Verfahren zum Aufbereiten von faserhaltigen Verbundwerkstoffen, insbesondere von faserhaltigen Verpackungsmaterialien, welches die folgenden Schritte umfasst:
a) Schwenken des Doppelbehälters (12) einer Vorrichtung (10) nach zumindest einem der Ansprüche 1 bis 9, so dass die Längsachse des inneren trommelartigen Behälters (14) bezogen auf die Horizontalebene einen Winkel γ₁ von 5 bis 90° einnimmt,
b) Einführen von aufzubereitendem faserhaltigen Verbundwerkstoff und von Wasser in den Innenraum des hohlzylindrischen Trommelmantels (18) des in dem Schritt a) geschwenkten inneren trommelartigen Behälters (14) und Drehen des inneren trommelartigen Behälters (14) um eine seiner beiden Umfangsrichtungen für eine Zeitspanne t₁,
c) Verringern des Schwenkwinkels des Doppelbehälters (12) auf einen auf die Horizontalebene bezogenen Winkel γ₂, wobei 0≤γ₂<γ₁, und Drehen des inneren trommelartigen Behälters (14) um eine seiner beiden Umfangsrichtungen für eine Zeitspanne t₂,
d) optional Vergrößern des Schwenkwinkels des Doppelbehälters (12) auf einen auf die Horizontalebene bezogenen Winkel γ₃, wobei γ₂<γ₃≤90°, Einführen von Wasser in den hohlzylindrischen Trommelmantel (18) des inneren trommelartigen Behälters (14) und Drehen des inneren trommelartigen Behälters (14) um dessen Längsachse für eine Zeitspanne t₃,
e) Verringern des Schwenkwinkels des Doppelbehälters (12) auf einen auf die Horizontalebene bezogenen Winkel von 0° und Entnehmen des verbliebenen Breis aus dem hohlzylindrischen Trommelmantel (18) des inneren trommelartigen Behälters (14).

13. Verfahren nach Anspruch 12,
**dadurch gekennzeichnet, dass**
der Winkel γ₁ in dem Schritt a) und/oder der Winkel γ₃ in dem Schritt d) auf einen Wert von 5 bis 60°, bevorzugt von 10 bis 50° und besonders bevorzugt von 15 bis450° eingestellt wird.

14. Verfahren nach Anspruch 12 oder 13,
**dadurch gekennzeichnet, dass**
während dem Schritt b) und/oder zwischen den Schritten b) und c) und/oder
während dem Schritt c) und/oder zwischen den Schritten c) und d) und/oder
während dem Schritt d) und/oder zwischen den Schritten d) und e) und/oder nach dem Schritt e) faserhaltige Suspension aus dem Zwischenraum (34) des Doppelbehälters (12) abgezogen wird und die faserhaltige Suspension in die Fest-Flüssig-Trenneinrichtung (48) geführt und in eine wasserreiche Fraktion und eine faserreiche Fraktion getrennt wird, wobei die wasserreiche Fraktion vorzugsweise in den Innenraum des hohlzylindrischen Trommelmantels (18) des inneren trommelartigen Behälters (14) zurückgeführt wird und die faserreiche Fraktion vorzugsweise in eine Reinigungseinrichtung (58) geführt wird.

15. Verfahren nach zumindest einem der Ansprüche 12 bis 14,
**dadurch gekennzeichnet, dass**
in dem Schritt b) faserhaltiges Verpackungsmaterial in den inneren trommelartigen Behälter (14) eingeführt wird, wobei das Verpackungsmaterial i) Fasermaterial, vorzugsweise in der Form von Pappe oder Papier, ii) Kunststoff, vorzugsweise Polyethylen, und optional iii) Aluminiumfolie enthält, und wobei in dem Schritt b) vorzugsweise gebrauchte Getränkeverpackungen eingesetzt werden.

## Claims

1. Apparatus (10) for the processing of fibrous composite materials, in particular fibrous packaging materials, with a double container (12) comprising:
- a drum-like inner container (14) rotatable in at least one of its two circumferential directions with a hollow-cylindrical drum casing (18), which is closed at one of its two end faces by a front base (20) and is open at its opposite end face, wherein the drum shell (18) comprises sieve holes (24) in at least one portion of its circumferential surface, and wherein at least one chicane (22, 22') is provided on at least one portion of the circumferential surface of the drum casing (18) and/or on the front base (20), and
- an outer container (16) that encases the drum casing (18) of the drum-like inner container (14) at least partially, so that a gap (34) forms between the outer surface of the drum-like inner container (14) and the inner surface of the outer container (16),
**characterized in that**
the double container (12) can be pivoted in the vertical plane.

2. Apparatus (10) according to claim 1,
**characterized in that**
the drum-like inner container (14) is rotatable with a stepwise adjustable speed in at least one of its two circumferential directions, wherein the drum-like inner container (14) is preferably rotatable in either of its two circumferential directions and the rotational direction can be changed from one circumferential direction to the other.

3. Apparatus (10) according to claim 1 or 2,
**characterized in that**
the double container (12) is incrementally pivotable relative to the horizontal plane by an angle of 0 to 45°, preferably by an angle of 0 to 90°, wherein the double container (12) is placed on a pivotable supporting element (36).

4. Apparatus (10) according to at least one of the preceding claims,
**characterized in that**
the inside of at least one portion of the circumferential surface of the drum casing (18) and/or front base (20) are provided with at least one chicane (22, 22') extending inwardly, wherein the at least one chicane (22, 22') is arranged at the inside of a segment of the circumferential surface of the drum casing (18) adjacent to the front base (20) and/or on the front base (20).

5. Apparatus (10) according to claim 4,
**characterized in that**
the at least one chicane (22, 22'), or - in case there is more than one chicane provided - at least a part of the chicanes are arranged along the inside of one portion of the circumferential surface of the drum casing (18), wherein the portion of the circumferential surface of the drum casing (18) extends over 15 to 30%, preferably over 10 to 30%, particularly preferably over 0 to 40%, and very particularly preferably over 0 to 50% of the longitudinal extent of the circumference of the drum casing, starting from the end in the longitudinal axis of the drum casing (18) that is provided with the front base (20).

6. Apparatus (10) according to at least one of the preceding claims,
**characterized in that**
the sieve holes (22, 22') are arranged in one portion of the circumferential surface of the drum casing (18) of the drum-like inner container (14), wherein the portion of the circumferential surface of the drum casing (18) extends over 80 to 90%, preferably over 70 to 90%, particularly preferably over 65 to 95%, and very particularly preferably over 60 to 95% of the longitudinal extent of the circumference of the drum casing, starting from the end in the longitudinal axis of the drum casing (18) that is provided with the front base (20).

7. Apparatus (10) according to at least one of the preceding claims,
**characterized in that**
in addition to the sieve holes (22, 22') arranged at the circumferential surface of the drum casing (18) of the inner container (14), at least one or more further sieve holes are arranged on the front end (20) of the inner container (14).

8. Apparatus (10) according to at least one of the preceding claims,
**characterized, in that**
the outer container (16) fully encases the drum casing (18) of the drum-like inner container by at least 50 %, preferably by at least 70%, and particularly preferably by at least 80%, starting from the end of the longitudinal axis of the drum casing provided with the front end (20).

9. Apparatus (10) according to at least one of the preceding claims,
**characterized, in that**
at least one deflection means (32) is provided at the inner surface of the drum-like inner container (14), wherein the at least one deflection means (32) is spirally shaped and preferably extends over at least 50%, particularly preferably over at least 70%, very particularly preferably over at least 90%, and most preferably over the entire length of the drum-like inner container (14).

10. System (46) for the processing of fibrous composite materials, in particular fibrous packaging materials, which comprises:
- an apparatus (10) according to at least one of the preceding claims,
- a solid-liquid separating device (48) as well as
- a press.

11. System (46) according to claim 10,
**characterized in that**
the solid-liquid separating device (48) is connected with the gap (34) of the double container (12) of the apparatus (10) through a line (52) and the solid-liquid separating device (48) is preferably a thickener, a dewatering table or a disk thickener, wherein a liquid recirculation line (54) extends from the solid-liquid separating device (48) into the hollow-cylindrical drum casing (18) of the drum-like inner container (14), and wherein the system also comprises a dissolved air flotation means (58), a centrifuge device or sedimentation device, which is connected with the solid-liquid separating device (48) through a liquid line (60).

12. Method for processing fibrous composite materials, in particular fibrous packaging materials including the following steps:
a) Swivelling the double container (12) of an apparatus (10) according to at least one of the claims 1 to 9,
so that the longitudinal axis of the drum-like inner container (14) occupies an angle γ₁ relative to the horizontal plane of 5 to 90°,
b) introducing a fibrous composite material to be processed and water into the interior of the hollow-cylindrical drum casing (18) of the drum-like inner container (14) swivelled in step a) and rotating the drum-like inner container (14) by one of its two circumferential directions for a period t₁,
c) reducing the pivot angle of the double container (12) to an angle γ₂ relative to the horizontal plane, wherein 0≤ γ₁< γ₂, and rotating the drum-like inner container (14) around one of its two circumferential directions for a period t₂,
d) optionally: Increasing the pivot angle of the double container (12) < γ₂≤90°, introducing of water into the hollow-cylindrical drum casing (18) of the drum-like inner container (14), and rotating the drum-like inner container (14) about its longitudinal axis for a period t₃,
e) reducing the pivot angle of the double container (12) to an angle relative to the horizontal plane of 0° and removing the remained pulp from the hollow-cylindrical drum casing (18) of the drum-like inner container (14).

13. Method according to claim 12,
**characterized in that**
the angle γ₁ in procedural step a) and/or the angle γ₃ in procedural step d) is set to a value of 5 to 60°, preferably 10 to 50°, and particularly preferably 15 to 450°.

14. Method according to claim 12 or 13,
characterized that
a fibrous suspension is removed from the gap (34) of the double container (12) during step b) and/or between steps b) and c), and/or during step c) and/or between the steps c) and d), and/or during step d) and/or between steps d) and e), and/or after step e); said fibrous suspension is introduced into the solid-liquid separating means (48) and is separated into a water-rich fraction and a fibre-rich fraction, wherein the water-rich fraction is preferably returned into the interior of the hollow-cylindrical drum casing (18) of the drum-like inner container (14) and the fibre-rich fraction is preferably transported to a cleaning unit (58).

15. Method according to at least one of the claims 12 to 14,
**characterized in that**
in step b) the fibrous packaging material is introduced in the drum-like inner container (14), wherein the packaging material contains i) fibrous materials, preferably in the form of cardboard or paper, ii) plastic materials, preferably polyethylene, and optionally iii) aluminium foil, and wherein in step b) preferably used beverage containers are used.

## Revendications

1. Dispositif (10) pour le traitement de matériaux composites fibreux, en particulier de matériaux d'emballage fibreux, comportant un récipient double (12) qui comprend :
- un récipient intérieur (14) en forme de tambour mobile en rotation dans l'une au moins de ses deux directions périphériques, comportant une enveloppe de tambour cylindrique creuse (18) qui est refermée sur l'une de ses deux faces frontales par un fond frontal (20) et qui est ouverte sur sa face frontale opposée, l'enveloppe de tambour (18) présentant des trous de tamisage (24) au moins sur une portion de sa surface périphérique, et au moins une chicane (22, 22') étant prévue sur une portion de la surface périphérique de l'enveloppe de tambour (18) et/ou sur le fond frontal (20), ainsi que
- un récipient extérieur (16) qui entoure au moins partiellement l'enveloppe de tambour (18) du récipient intérieur (14) en forme de tambour, de telle sorte qu'il se forme un espace intermédiaire (34) entre la surface extérieure du récipient intérieur (14) en forme de tambour et la surface intérieure du récipient extérieur (16),
**caractérisé en ce que**
le récipient double (12) est mobile en basculement dans le plan vertical.

2. Dispositif (10) selon la revendication 1,
**caractérisé en ce que**
le récipient intérieur (14) en forme de tambour est mobile en rotation dans l'une au moins de ses deux directions périphériques à une vitesse réglable graduellement, le récipient intérieur (14) en forme de tambour étant de préférence mobile en rotation dans les deux de ses deux directions périphériques et la direction de rotation pouvant être changée d'une direction périphérique vers l'autre et inversement.

3. Dispositif (10) selon la revendication 1 ou 2,
**caractérisé en ce que**
le récipient double (12) est graduellement mobile en basculement d'un angle de 0 à 45° et de préférence de 0 à 90° par rapport au plan horizontal, le récipient double (12) étant monté sur un bâti (36) mobile en basculement.

4. Dispositif (10) selon l'une au moins des revendications précédentes,
**caractérisé en ce que**
il est prévu au moins une chicane (22, 22') dirigée vers l'intérieur sur le côté intérieur d'au moins une portion de la surface périphérique de l'enveloppe de tambour (18) et/ou sur le fond frontal (20) du récipient intérieur (14) en forme de tambour, ladite au moins une chicane (22, 22') étant agencée sur le côté intérieur d'une portion, voisine du fond frontal (20), de la surface périphérique de l'enveloppe de tambour (18) et/ou sur le fond frontal (20).

5. Dispositif (10) selon la revendication 4,
**caractérisé en ce que**
ladite au moins une chicane (22, 22') ou, s'il est prévu plus d'une chicane, au moins une partie des chicanes est agencée sur le côté intérieur d'une portion de la surface périphérique de l'enveloppe de tambour (18), et une portion de la surface périphérique de l'enveloppe de tambour (18), vue en partant de l'extrémité pourvue du fond frontal (20) de long de l'axe longitudinal de l'enveloppe de tambour (18), s'étend sur 15 à 30 %, de préférence sur 10 à 30 %, de préférence particulière sur 0 à 40 % et de manière tout particulièrement préférée sur 0 à 50 % de l'extension longitudinale de la périphérie de l'enveloppe de tambour.

6. Dispositif (10) selon l'une au moins des revendications précédentes,
**caractérisé en ce que**
les trous de tamisage (22, 22') sont disposés sur une portion de la surface périphérique de l'enveloppe de tambour (18) du récipient intérieur (14) en forme de tambour, et la portion de la surface périphérique de l'enveloppe de tambour (18), vue en partant de l'extrémité pourvue du fond frontal (20) le long de l'axe longitudinal de l'enveloppe de tambour (18), s'étend sur 80 à 90 %, de préférence sur 70 à 90 %, de préférence particulière sur 65 à 95 % et de manière tout particulièrement préférée sur 60 à 95 % de l'extension longitudinale de la périphérie de l'enveloppe de tambour.

7. Dispositif (10) selon l'une au moins des revendications précédentes,
**caractérisé en ce que**
en supplément aux trous de tamisage (22, 22') disposés sur la surface périphérique de l'enveloppe de tambour (18) du récipient intérieur (14), au moins un ou plusieurs autres trous de tamisage sont disposés sur le fond frontal (20) du récipient intérieur (14).

8. Dispositif (10) selon l'une au moins des revendications précédentes,
**caractérisé en ce que**
le récipient extérieur (16), vu en partant de l'extrémité pourvue du fond frontal (20) le long de l'axe longitudinal de l'enveloppe de tambour (18), entoure l'enveloppe de tambour (18) du récipient intérieur (14) en forme de tambour sur toute la surface de plus de 50 %, de préférence d'au moins 70 % et de préférence particulière d'au moins 80 %.

9. Dispositif (10) selon l'une au moins des revendications précédentes,
**caractérisé en ce que**
il est prévu au moins un moyen de déviation (32) sur la surface intérieure du récipient intérieur (14) en forme de tambour, ledit au moins un moyen de déviation (32) étant conçu en forme spiralée et s'étendant de préférence sur au moins 50 %, de préférence particulière sur au moins 70 % et de manière particulièrement préférée sur au moins 80 % et de préférence absolue sur toute la longueur du récipient intérieur (14) en forme de tambour.

10. Installation (46) pour le traitement de matériaux composites fibreux, en particulier de matériaux d'emballage fibreux, comportant :
- un dispositif (10) selon l'une au moins des revendications précédentes,
- un moyen de séparation solide-liquide (48) ainsi que
- une presse (50).

11. Installation (46) selon la revendication 10,
**caractérisée en ce que**
le moyen de séparation solide-liquide (48) est relié à l'espace intermédiaire (34) du récipient double (12) du dispositif (10) par une conduite (52) et le moyen de séparation solide-liquide (48) est un épaississeur, une table de déshydratation ou un tamis et de préférence un épaississeur à plaque, une conduite de retour de liquide (54) menant depuis le moyen de séparation solide-liquide (48) jusque dans l'enveloppe de tambour (18) cylindrique creuse du récipient intérieur (14) en forme de tambour, l'installation comprenant en outre un moyen de flottation par détente de pression (58), un moyen de centrifugation ou un moyen de sédimentation, qui est relié au moyen de séparation solide-liquide (48) par une conduite à liquide (60).

12. Procédé de traitement de matériaux composites fibreux, en particulier de matériaux d'emballage fibreux, comprenant les étapes suivantes consistant à :
a) basculer le récipient double (12) d'un dispositif (10) selon l'une au moins des revendications 1 à 9, de sorte que l'axe longitudinal du récipient intérieur (14) en forme de tambour définit un angle γ₁ de 5 à 90° par rapport au plan horizontal,
b) introduire le matériau composite fibreux à traiter et de l'eau dans le volume intérieur de l'enveloppe de tambour (18) cylindrique creuse du récipient intérieur (14) en forme de tambour basculé dans l'étape a) et faire tourner le récipient intérieur (14) en forme de tambour dans l'une de ses deux directions périphériques pendant une période temporelle t₁,
c) réduire l'angle de basculement du récipient double (12) à un angle γ₂ relatif au plan horizontal, pour lequel 0 ≤ γ₂ < γ₁, et faire tourner le récipient intérieur (14) en forme de tambour dans l'une de ses deux directions périphériques pendant une période temporelle t₂,
d) optionnellement agrandir l'angle de basculement du récipient double (12) à un angle γ₃ relatif au plan horizontal, pour lequel γ₂ < γ₃ ≤ 90°, introduire de l'eau dans l'enveloppe de tambour (18) cylindrique creuse du récipient intérieur (14) en forme de tambour et faire tourner le récipient intérieur (14) en forme de tambour autour de son axe longitudinal pendant une période temporelle t₃,
e) réduire l'angle de basculement du récipient double (12) à un angle de 0° relatif au plan horizontal et prélever la pâte restante hors de l'enveloppe de tambour (18) cylindrique creuse du récipient intérieur (14) en forme de tambour.

13. Procédé selon la revendication 12,
**caractérisé en ce que**
l'angle γ₁ dans l'étape a) et/ou l'angle γ₃ dans l'étape d) est réglé à une valeur de 5 à 60°, de préférence de 10 à 50° et de manière particulièrement préférée de 15 à 450°.

14. Procédé selon la revendication 12 ou 13,
**caractérisé en ce que**
pendant l'étape b) et/ou entre les étapes b) et c), et/ou pendant l'étape c) et/ou entre les étapes c) et d), et/ou pendant l'étape d) et/ou entre les étapes d) et e), et/ou après l'étape e), la suspension fibreuse est soutirée de l'espace intermédiaire (34) du récipient double, et la suspension fibreuse est amenée dans le moyen de séparation solide-liquide (48) et est séparée en une fraction riche en eau et en une fraction riche en fibres, la fraction riche en eau étant de préférence amenée en retour dans le volume intérieur de l'enveloppe de tambour (18) cylindrique creuse du récipient intérieur (14) en forme de tambour, et la fraction riche en fibres étant amenée de préférence dans un moyen de nettoyage (58).

15. Procédé selon l'une au moins des revendications 12 à 14,
**caractérisé en ce que**
dans l'étape b), le matériau d'emballage fibreux est introduit dans le récipient intérieur (14) en forme de tambour, le matériau d'emballage contenant i) du matériau fibreux, de préférence sous forme de carton ou de papier, ii) de la matière plastique, de préférence du polyéthylène, et optionnellement iii) un film d'aluminium, et
dans l'étape b) on utilise de préférence des emballages de boisson utilisés.
